# EUROPEAN PATENT SPECIFICATION

(11) **EP 1 252 788 B1**
(45) Date of publication and mention of the grant of the patent: **09.08.2006**
(21) Application number: 01902034.6
(22) Date of filing: 12.01.2001
(51) Int. Cl.: H04Q 7/38

(54) **Methods and systems for routing messages associated with ported subscribers in a mobile communications network**
Verfahren und Systeme zur Vermittlung von Nachrichten, die mit übertragenen Teilnehmern verbunden sind, in einem mobilen Kommunikationsnetz
Pocédé et systèmes d'acheminement de messages associes à des abonnés tranferes dans un réseau de communications mobiles

(30) Priority: 21.01.2000 US 177523 P
(43) Date of publication of application: 30.10.2002
(73) Proprietor: Tekelec, Calabasas, CA 91302 (US)
(72) Inventor: MCCANN, Thomas, Matthew, Morrisville, NC 27560 (US); RAO, Raghavendra, Gopala, Cary, North Carolina 27519 (US); WEST, Robert, Fulton, Jr., Raleigh, North Carolina 27613 (US); MARSICO, Peter, Joseph, Carrboro, NC 27510 (US)
(74) Representative: Skuhra, Udo
(86) International application number: PCT/US2001/001052
(87) International publication number: WO 2001/054444

(56) References cited:
- EP-A- 0 944 276
- WO-A-99/11087
- US-A- 5 878 347

## Description

### Technical Field

The present invention relates to the routing of signaling messages in a communications network, and, more particularly, to methods and systems for processing and routing signaling messages associated with ported subscribers in a wireless communication network.

### Background Art

Within the global wireless telecommunications industry, the current trend in network technology is divided between global system for mobile communications (GSM) and ANSI-41 based architectures. In many respects, GSM and ANSI-41 based networks are quite similar, with the primary differences between the two technologies simply relating to the protocols used to communicate between the various network entities, and the operating frequencies of the communication handsets themselves. As such, in the interest of clarity, discussions of the present invention will henceforth be limited to GSM type network implementations. However, it should be appreciated that the present invention could be similarly practiced in an ANSI-41, Personal Communication Services (PCS) or similar type network.

European patent application EP 0 944 276 discloses a method for porting a mobile directory number from one wireless service provider to another. A method for processing messages in a mobile communications network which receives a message with a called party identifier, analyses the message to determine if number portability processing is required, and if required looking up in a database in the receiving network and relaying the message to another network is disclosed. According to said,European patent application, an entry in the donor system HLR (home location register) is required to be modified in order to properly route calls for ported-out subscribers. Such a modification means that the donor HLR is required to be contacted for each call, regardless of whether the subscriber is ported-in or ported-out increasing signaling traffic.

United States patent U.S. 5,878,347 discloses method steps as mentioned above with respect to EP 0 944 276 and discloses in addition a virtual HLR which does not alter the originating point code in messages sent to the HLR for ported-in or ported-out subscribers. That means that the OPC (originating point code) in the message is rerouted by the virtual HLFR and not changed. This may cause significant network management problems, if the destination HLR fails.

The international application publication WO 99/11087 discloses a method and system for processing calls for a communication equipment with a subscriber number ported from a first operator to a second operator, in particular suitable for use in systems for mobile communication. In the international application publication, a specialized memory device in order to process calls for ported-in or ported-out subscribers is required which responds to query messages. The specialized memory device sends a signal back to the querying MSC (mobile switching center) in order to complete a call which increases the signaling traffic in the network and requires specialized stand-alone memory devices.

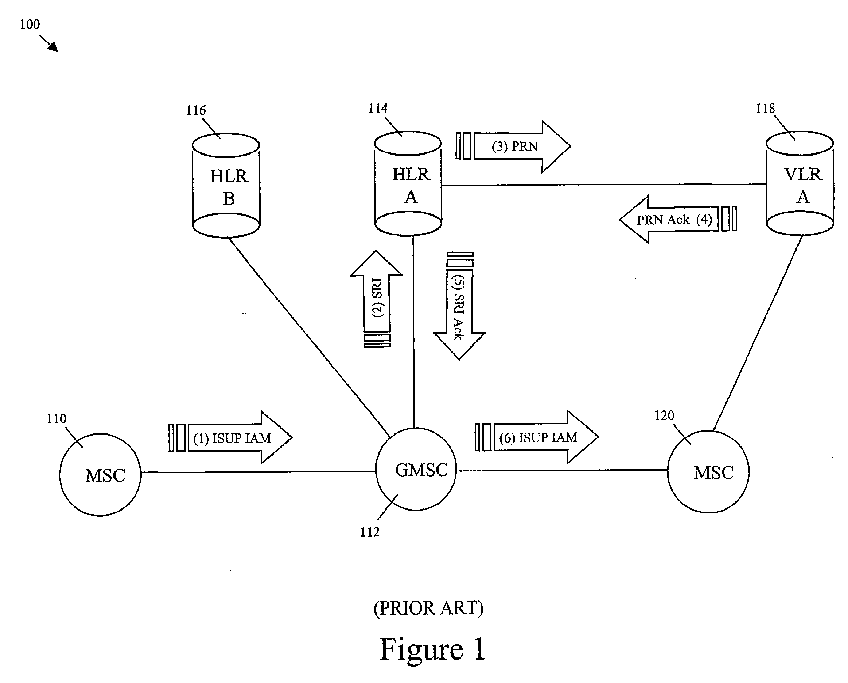

A typical GSM network architecture is illustrated in Figure 1. As shown in Figure 1, the typical GSM network, generally indicated by the numeral **100,** incorporates a number of functional elements or nodes which are appropriately interconnected so as to obtain the desired overall network service. These network nodes include a first mobile switching center **110,** a gateway mobile switching center **112,** a first home location register (HLR) **114,** a second home location register **116,** a visitor location register (VLR) **118,** and a second MSC **120.** Briefly, an HLR is a database that is used to store subscriber information for all customers within the home service area of the GSM service provider. Functionally, an HLR is linked through a signaling network to other service areas such that subscriber information may be efficiently shared between geographically diverse networks, a characteristic that facilitates seamless inter-network roaming. Like an HLR node, a VLR node is also a database that contains subscriber information. However, a VLR is specifically used to store information related to subscribers who are not in their home service area. More particularly, a VLR is where roaming related data for a customer is stored when the customer activates their handset outside of their designated home service area.

Again, the network elements described above (HLR and VLR) can be thought of as essentially databases or database processing nodes. Unlike these database nodes, MSCs and GMSCs are generally identified as network switching elements. Among their many functions, MSCs and GMSCs are responsible for determining which cell site will take possession of a call. Such hand off control is facilitated by a communication link between an MSC and an associated Base Station Controller (BSC) / Base Transceiver Station (BTS) pair (not shown). A GMSC node typically has the added distinction of providing connectivity to one or more HLR nodes; otherwise, MSC and GMSC functionality is very similar.

As generally illustrated in Figure 1, GMSC **112** is coupled via signaling links to two HLR database nodes **114** and **116** described above, and as such, all signaling message access to these database nodes is controlled and administered by GMSC **112.** Of particular relevance to the present invention are the signaling aspects of the GSM network described above, especially those aspects associated with the signaling interactions between HLR, VLR and MSC or GMSC type nodes. A more detailed explanation of HLR, VLR and GMSC operation is provided below.

Within a GSM wireless communication network, each mobile station handset is assigned a unique identification number known as an International Mobile Subscriber Identity (IMSI) identification number. In the case of European GSM-type network implementations, the IMSI code is typically associated with a particular telephone handset. In such networks, each user can also be assigned one or more Mobile Station Integrated Services Digital Network (MSISDN) numbers. In the wireless telecommunications industry, MSISDN numbers are analogous to the 10 digit telephone numbers in a conventional North American wired network. The fact that multiple MSISDN numbers can be associated with a single IMSI number indicates that more than one MSISDN number can be assigned and used to reach a single mobile station handset. It should be appreciated that in this disclosure, the term "Mobile Identification Number" (MIN) is used generically to refer to IMSI, MSISDN, Mobile Global Title, ANSI-41 Mobile Identification Numbers (MIN) and Mobile Directory Numbers (MDN), and other identification numbers associated with subscribers or services in a wireless communication network.

In any event, an MSISDN number is dialed whenever a user wants to communicate with a particular mobile station handset. As indicated in Figure 1, GMSC **112,** by analyzing a part of the dialed MSISDN number, determines the particular HLR that is storing routing information associated with the called mobile station. By retrieving and utilizing such routing information, the GSM network is able to locate the called mobile station in response to a call attempt so that a call connection can be established between the calling party and the called mobile station. It should also be appreciated that, depending on the nature of the call or signaling event, a GMSC may analyze and direct an HLR lookup based on either the IMSI or MSISDN number associated with the called or calling party.

In the particular example presented in Figure 1, MSC **110** launches an ISDN user part (ISUP) initial address message (IAM) (message 1) in an attempt to establish a call originated by a mobile subscriber that is being serviced by MSC **110.** Those skilled in the art of mobile communication networks will appreciate that an ISUP IAM message is one of many signaling messages that are employed in a signaling system 7 (SS7) based signaling network to facilitate the setup of a telephone call. A detailed discussion of SS7 signaling message types and their associated function can be found in *Signaling System* #7 by Travis Russell, McGraw-Hill Publishing 1998. Additionally, a detailed discussion of SS7 related signaling within a GSM network can be found in *The GSM System for Mobile Communications* by Michel Mouly and Marie-Bernadette Pautet, Cell & Sys 1992.

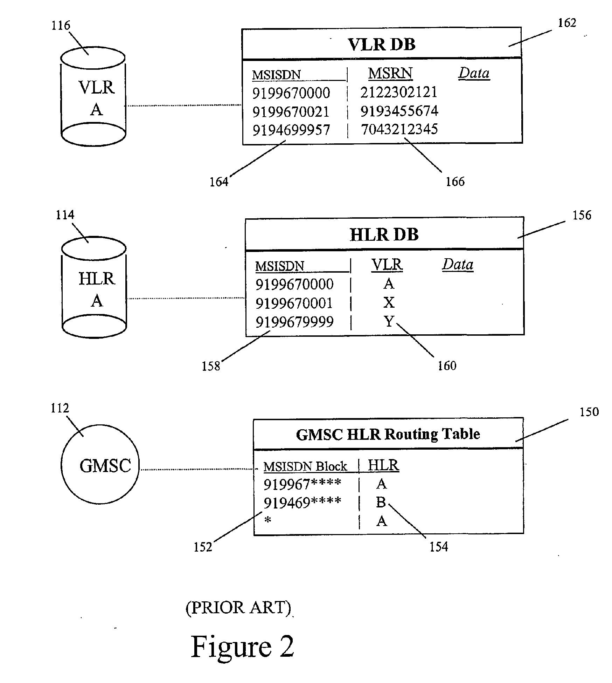

Returning to a discussion of Figure 1, it will be appreciated that ISUP IAM message (**1**) is received by GMSC **112,** which in turn analyzes the message. More particularly, GMSC **112** examines the MSISDN value associated with the called party, as well as service indication information contained in the message. Shown in Figure 2 is a simplified routing database table **150** contained within GMSC **112**. This sample GMSC routing database table **150** is keyed or indexed based on a block or range of MSISDN numbers **152.** Associated with each block or range of MSISDN numbers is an address or identifier **154** of an associated HLR node.

Returning to Figure 1, GMSC **112** performs a lookup in HLR routing table **150**, determines that this message should be delivered to HLR **114,** and subsequently formulates a send routing information (SRI) request message **2**. Upon receipt of SRI message **2**, HLR **114** examines the message and, in one case, determines that there is not enough information available to determine the appropriate routing address that is needed to deliver the original ISUP IAM message **1** to its destination. However, in such a scenario, HLR **114** is able to determine the routing address of a VLR **118** that contains the information necessary to continue the routing of ISUP IAM message **1.** This determination is made via a lookup in an internal routing database **156,** as shown in Figure 2. The simplified sample HLR routing database **156** is keyed or indexed by MSISDN number **158** and includes a pointer or address **160** to a VLR node that is currently servicing each MSISDN entry. Consequently, HLR **114** formulates a Provide Routing Number (PRN) message 3, and addresses this message to VLR **118.** The VLR **118,** upon receipt of the PRN message **3,** performs a database lookup based on the called party MSISDN and subsequently returns a mobile station roaming number (MSRN) which is used to identify the MSC that is currently servicing the called party. A simplified, sample VLR database 162 is shown in Figure 2. VLR database **162** is keyed or indexed by MSISDN number **164,** and includes an MSRN **166** that is associated with each MSISDN entry. Returning to Figure 1, the MSRN value extracted from VLR database **162** is included in a PRN result or acknowledge (PRN Ack) message **4** that is formulated by the VLR **118** and returned to the interrogating HLR **114.** Upon receipt of the PRN Ack message **4,** HLR **114** formulates an SRI Acknowledge (SRI Ack) message **5** that serves as a response to the original SRI message **2.** SRI Ack message **5** includes the MSRN that was provided by the VLR **118,** and is delivered to the originator of the SRI message **2,** GMSC **112.** GMSC **112** receives the SRI Ack message **5** and uses the MSRN value contained therein to modify the routing label of the original ISUP IAM message **1.** A modified ISUP IAM message **6** is subsequently produced which is addressed to the MSC that is currently serving the called party.

Again, it will be appreciated that the example presented above is a simple call setup scenario, intended primarily to illustrate the basic call setup and associated message flow processes associated therewith. Significantly more complicated call setup scenarios may be encountered in real world network implementations. Also, not all signaling messages received by a GMSC are necessarily directly related to call setup and teardown operations, and hence would not necessarily follow the same processing steps as described in the ISUP IAM call setup example presented above.

In the sample scenario illustrated in Figure 1, HLR **114** and HLR **116** are each configured to service a pre-defined block of subscriber MSISDN numbers. In general, a specific series or block of MSISDN (or IMSI) numbers are pre-assigned to each HLR in a service provider's network, as further indicated by routing table **150** in Figure 2. Again, it should be appreciated that the HLR database **156** and GMSC routing table 150 structures shown in Figure 2 are merely illustrative of the high level information storage concept and are not intended to represent the actual data structures that would typically be implemented in such network nodes. In many cases, service providers are not able to alter these blocks of assigned numbers within a given HLR unit because of routing limitations of the GMSC associated with the HLR unit. Consequently, service providers have no opportunity to dynamically re-allocate their MSISDN number base across multiple HLRs, so as to more efficiently utilize existing HLR resources (i.e., load sharing). It should be noted that this limitation is typically the result of routing table restrictions in the MSCs, and generally not database storage restrictions in the HLRs. That is, although HLRs can generally be populated so as to contain subscriber data entries for any IMSI or MSISDN number, GMSCs are typically only capable of routing messages based on an IMSI or MSISDN block in which the message's IMSI or MSISDN number falls. These IMSI or MSISDN blocks are comprised of a sequential range of IMSI or MSISDN numbers. Thus, it is the limited routing capability of a GMSC that causes the problem, and typically not the HLR nodes.

For instance, in Figure 1, all traffic relating to calls associated with an MSISDN number between 9199670000 and 9199679999 will be routed to HLR A **114** by the associated GMSC **112.** As the service provider begins to acquire more and more customers (i.e., assigning more and more of the MSISDN numbers in the allocated block or series 9199670000 to 9199679999), the traffic or congestion experienced at HLR A **114** node will increase accordingly.

Now consider that a service provider owning HLR A **114** illustrated in Figure 1 has acquired so many new customers that it is decided to invest in an additional HLR B **116.** At the time of implementation HLR B **116** is populated with MSISDN number block 9194690000 - 9194699999. HLR B **116** is linked to the adjacent GMSC **112** and activated so as to service any calls corresponding to the pre-programmed MSISDN block.

The major shortcoming of range-based routing associated with such multiple HLR configurations can now be more fully appreciated. Despite the addition of the new HLR resource capacity represented by unit B, all call traffic associated with MSISDN numbers 9199670000 - 9199679999 must still be handled by a single HLR, HLR A **114.** Even if the service provider has no customers within the MSISDN 9194690000 - 9194699999 number range, it is not possible for the service provider to dynamically re-allocate or re-distribute the "fully assigned" 9199670000 - 9199679999 MSISDN number block among the unused HLR B **116** unit. Thus, it is possible that a network service provider will be forced to operate in a situation where traffic to HLR A **114** is highly congested, while the HLR B **116** resource is completely unused. This can lead to less than efficient usage of installed resources, as it would be more efficient to load balance or share traffic more equally among the two HLR units.

It should be appreciated that, in addition to the load sharing concerns, there are similar issues and similar needs that arise when considering the porting of subscribers from one service provider to another, otherwise known as number portability (NP). Once again, one of the central problems facing a network operator in such a scenario is the ability to freely distribute subscriber information among multiple HLR nodes. With particular regard to the case of mobile number portability, it will be appreciated that ported mobile subscribers may either be ported "in" to an operator's network from a competing carrier, or ported "out" of an operator's network to a competing carrier. Consider the simplified network presented in Figure 1 with regard to such an "in-ported" scenario. That is, the owner of network 100 acquires a new mobile subscriber that was formerly a customer of a competing network operator. For the purposes of example, assume that this new mobile subscriber has an MSISDN number of (919) 345-7015 and wishes to keep this same MSISDN number in the new operator's network. By default, this new subscriber's information would be stored and maintained in HLR A, as generally indicated by GMSC routing table **150** shown in Figure 2. Consequently, when a signaling message associated with the new mobile subscriber that requires HLR access is received by GMSC **112,** a lookup is performed in GMSC routing table **150** and the message is subsequently routed to HLR A **114.** It will be again be appreciated that due to the range-based routing table configuration of GMSC **112,** flexible allocation of in-ported mobile subscribers among available HLR resources is significantly impaired.

With regard to "out-ported" subscribers or mobile subscribers that have been ported out of a service provider's network, the same flexible HLR allocation limitations exist due to the range-based routing table configuration in GMSC **112.** Furthermore, in the case of a signaling message associated with a mobile subscriber that has been ported out of a service provider's network, it will be appreciated that processing of the signaling message by one of the operator's HLR nodes is no longer necessary. That is, since the subscriber has been ported out of the service provider's network, the service provider's network is no longer considered to be the mobile subscriber's "home" and, consequently, the service provider's home location registers (HLRs) no longer need to store information associated with the mobile subscriber. However, as generally indicated in Figures 1 and 2, despite elimination of the out-ported subscriber's information from the service provider's HLR resources, GMSC **112** will continue to route signaling messages associated with the mobile subscriber to one of the service provider's HLR nodes.

Consider the case of an out-ported mobile subscriber with an MSISDN number of (919) 967-2000. When GMSC **112** receives a signaling message associated with the out-ported subscriber, a lookup is performed in routing table **150** and the signaling message is subsequently routed to HLR A **114** despite the fact that information for that mobile subscriber is no longer maintained in HLR A. Such unnecessary routing constitutes an inefficient use of both routing and HLR database resources.

Therefore, what is needed is a system and method of efficiently redirecting signaling messages associated with both in and out-ported mobile subscribers among HLR, equipment identity register (EIR), authentication center (AuC), short message service center (SMSC), and other similar signaling database type nodes, where message routing occurs in such a way as to preserve compliance with existing industry standard network management signaling protocols.

### Disclosure of the Invention

The present invention includes a method according to claims 1 or 13, a routing element according to claims 16 or 19 and a signal transfer point according to claim 23.

### Brief Description of the Drawings

Figure 1 is a diagram illustrating a prior art mobile telecommunication network architecture and associated network elements.
Figure 2 is a diagram illustrating sample routing information maintained by several mobile telecommunication network elements.
Figure 3 is a schematic diagram of a prior art signal transfer point (STP) switching node.
Figure 4 is diagram illustrating an internal architecture of a porting control routing (PCR) node of the present invention, illustrating message flow associated with an exceptions-based routing database lookup.
Figure 5a is a table illustrating a GSM mobile number portability (G-Port™) exceptions-based data table structure.
Figure 5b is a table illustrating a range-based data table structure.
Figure 6 is diagram illustrating an internal architecture of a PCR node of the present invention, illustrating message flow associated with a default range-based routing database lookup.
Figures 7a-7c are a process flow chart diagram illustrating signaling message processing steps within a PCR node of the present invention.
Figure 8 is a network diagram illustrating signaling message flows associated with the establishment of a call to a mobile subscriber that has been ported out of a service provider's network.
Figure 9 is a table illustrating parameter values in a send routing information (SRI) message and an SRI acknowledgment (SRI Ack) message associated with the establishment of a call to a mobile subscriber that has been ported out of a service provider's network.
Figure 10 is a network diagram illustrating signaling message flows associated with the establishment of a call to a mobile subscriber that has not been ported out of a service provider's network.
Figure 11 is a table illustrating parameter values in an original SRI message and a modified SRI message associated with the establishment of a call to a mobile subscriber that has not been ported out of a service provider's network.
Figure 12 is a network diagram illustrating signaling message flows associated with a short message service (SMS) communication to a mobile subscriber that has been ported out of a service provider's network.
Figure 13 is a table illustrating parameter values in an original SRI-SMS message and a modified SRI-SMS message associated with an SMS communication to a mobile subscriber that has been ported out of a service provider's network.
Figure 14 is a network diagram illustrating signaling message flows associated with a short message service (SMS) communication to a mobile subscriber that has not been ported out of a service provider's network.
Figure 15 is a table illustrating parameter values in an original SRI-SMS message and a modified SRI-SMS message associated with an SMS communication to a mobile subscriber that has not been ported out of a service provider's network.

### Detailed Description of the Invention

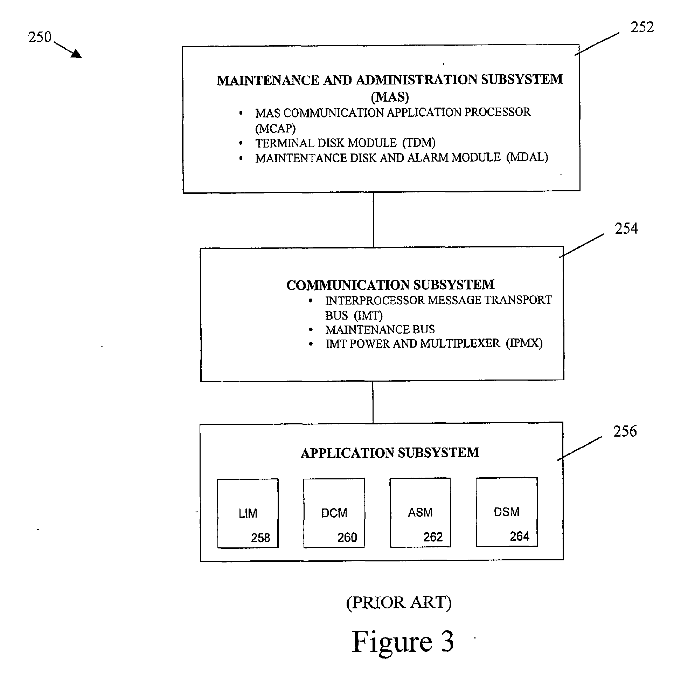

Disclosed herein are several embodiments of the present invention, all of which include a network element that performs functions similar to that of a telecommunications network packet routing switch, such as a signal transfer point (STP) or a signaling gateway (SG) routing node. As used herein, the term "signaling gateway" refers to a packet routing node capable of routing call signaling messages between nodes of different protocols, such as SS7 nodes and IP nodes. Each of the embodiments described below employs an internal architecture similar to that of high performance STP and SG products which are marketed by the assignee of the present application as the Eagle® STP and IP⁷ Secure Gateway™, respectively. A block diagram that generally illustrates the base internal architecture of the IP⁷ Secure Gateway™ product is shown in Figure 3. A detailed description of the IP⁷ Secure Gateway™ may be found in Tekelec publication PN/909-0767-01, Rev B, August 1999, entitled *Feature Notice IP*^{*7*} *Secure Gateway™ Release 1.0* published by Tekelec. Similarly, a detailed description of the Eagle® STP may be found in the *Eagle® Feature Guide* PN/910-1225-01, Rev. B, January 1998. As described in the above referenced Feature Notice, an IP⁷ Secure Gateway™ **250** includes the following subsystems: a maintenance and administration subsystem (MAS) **252,** a communication subsystem **254** and an application subsystem **256.** MAS **252** provides maintenance communications, program load, peripheral services, alarm processing and system disks. Communication subsystem **254** includes an interprocessor message transport (IMT) bus that is the main communication bus among all subsystems in the IP⁷ Secure Gateway™ **250.** This high-speed communications system functions as two 125 Mbps counter-rotating serial buses.

Application subsystem **256** includes application cards that are capable of communicating with the other cards through the IMT buses. Numerous types of application cards can be incorporated into SG **250,** including but not limited to: a link interface module (LIM) **258** that provides SS7 links and X.25 links, an data communication module (DCM) **260** that provides a TCP/IP interface to an external monitoring device over Ethernet, and an application service module (ASM) **262** that provides global title translation, gateway screening and other services. A database service module (DSM) **264** may also be provided to support number portability service. It should be appreciated that, in addition to conventional SS7 LIM cards, one or more DCM cards can be employed in a similar manner to provide for the transport of Internet Protocol (IP) encapsulated SS7 messages over an IP network, as described in the above referenced *Feature Notice IP*^{*7*} *Secure Gateway™ Release 1.0* publication. The specific functional components of an IP⁷ Secure Gateway™ for transmitting and receiving transaction capabilities application part (TCAP) messages over an Internet Protocol (IP) network are described in commonly-assigned, co-pending International Patent Publication No. WO 00/35155. Similarly, the functional components of an IP⁷ Secure Gateway™ for transmitting and receiving ISDN user part (ISUP) messages over an Internet Protocol (IP) network are described in commonly-assigned, co-pending International Patent Publication No. WO 00/35156.

### Porting Control Routing Node Internal Architecture

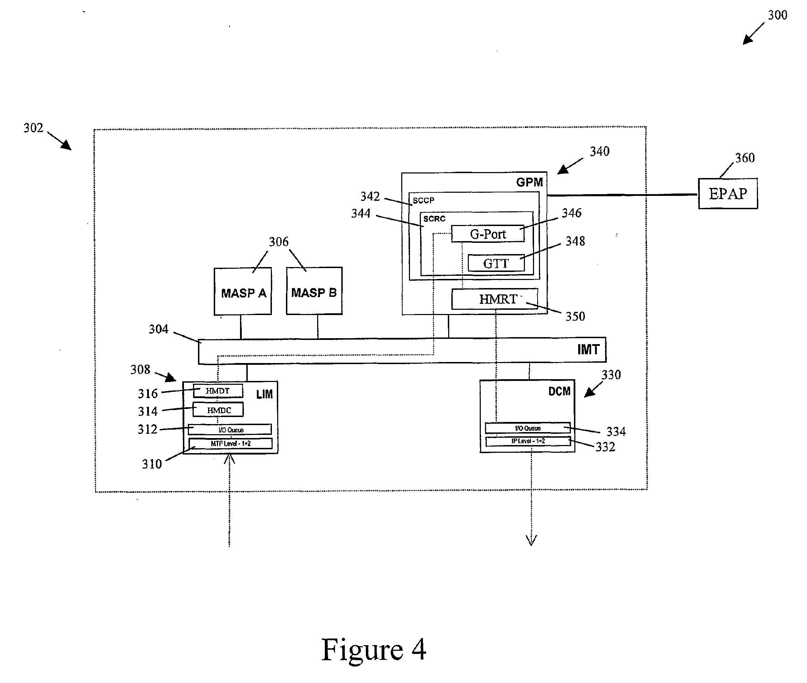

Presented in Figure 4 is one embodiment of a porting control routing (PCR) node of the present invention, generally indicated by the numeral **302.** PCR **302** includes an interprocessor message transport (IMT) bus **304** that is the main communication bus among all internal subsystems within switch or routing node. In one embodiment, this high-speed communications system functions as two 125 Mbps counter-rotating serial buses. Communicatively coupled to IMT bus **304** are a number of distributed processing modules or cards including: a pair of maintenance and administration subsystem processors (MASPs) **306,** an SS7 capable link interface module (LIM) **308,** an Internet protocol (IP) capable data communication module (DCM) **330,** and a G-Port™ service module (GPM) **340.** These modules are physically connected to IMT bus **304** such that signaling and other types of messages may be routed internally between all active cards or modules. For simplicity of illustration, only single LIM, DCM, and GPM cards are included in Figure 4. However, it should be appreciated that the distributed, multi-processor architecture of the PCR node **302** facilitates the deployment of multiple LIM, DCM, GPM and other cards, all of which could be simultaneously connected to and communicating via IMT bus **304.**

MASP pair **306** is adapted to provide maintenance communications, initial program load, peripheral services, alarm processing and system disks. Because MASP pair **306** is not particularly relevant to a discussion of PCR functionality, a detailed discussion of the design and operation of MASP pair **306** is not provided herein. For a comprehensive discussion of additional MASP operations and functionality, the above-referenced Tekelec IP⁷ Secure Gateway™ and Eagle® STP publications can be consulted.

Focusing now on LIM card functionality, in the illustrated embodiment LIM **308** is comprised of a number of sub-components including, but not limited to: an SS7 MTP level 1 and 2 layer process **310,** an I/O buffer or queue **312,** an SS7 MTP level 3 layer HMDC process **314,** and an HMDT process **316.** MTP level 1 and 2 layer process **310** provides the facilities necessary to send and receive digital data over a particular physical media /physical interface, as well as to provide error detection / correction and sequenced delivery of all SS7 message packets. I/O queue **312** provides for temporary buffering of incoming and outgoing signaling message packets. MTP level 3 HMDC process **314** performs a discrimination function, effectively determining whether an incoming SS7 message packet requires internal processing or is simply to be through switched, i.e., routed to another node. In one embodiment, HMDC process **314** examines a service indicator octet (SIO) value in the received message packet in order to determine whether internal signaling connection control part (SCCP) processing is required. HMDT process **316** handles the internal routing of SS7 message packets that require additional processing prior to final routing.

DCM **330,** shown in Figure 4, includes an Internet protocol (IP) lower level protocol process **332** and an I/O queue **334** perform functions that are analogous to their SS7-based LIM counterparts described above. It should be appreciated that outgoing SS7 message packets routed through the DCM **330** will be transmitted out of the PCR node **302** and into an Internet protocol (IP) network. As the SS7 / Message Transfer Part (MTP) communication protocol and the IP communication protocol are not inherently compatible, all SS7 message packets that are to be transmitted via an IP network must first be encapsulated within an IP routing envelope prior to transmission. In one embodiment, this IP encapsulation is performed by the IP process **332.** Again, in such a design scenario, the IP process **332** is the IP protocol equivalent of the SS7 MTP level 1-2 layer process **310** of the LIM module **308.** It will be appreciated that the message packets received and transmitted by a DCM card may include transport adapter layer interface (TALI) protocol messages, session initiation protocol (SIP), M2UA, SS7 MTP3 user adaptation layer (M3UA), SS7 SCCP user adaptation layer (SUA), H.323 or other signaling protocols that may be transported via TCP/IP or similar IP based protocols. Preferred packet formats for encapsulating various types of SS7 messages in IP packets are described in Internet Engineering Task Force (IETF) INTERNET DRAFT <draft-benedyksigtran-tali-01.txt> entitled Transport Adapter Layer Interface, June 20, 2000, the disclosure of which is incorporated herein by reference in its entirety. Furthermore, the TALI protocol is also described in detail in commonly-assigned, co-pending International Patent Publication No. WO 00/76134, the disclosure of which is incorporated herein by reference in its entirety. Again, it will be appreciated that the concepts described in this disclosure are not dependent on the above referenced TALI signaling protocol. Other functionally similar signaling protocols may be employed within the scope of the present invention, including for example, the IETF SUA/M3UA protocol.

Once again, the description of LIM and DCM sub-components provided herein is limited to those sub-components that are relevant to the sample implementation scenarios illustrated throughout this disclosure. For a comprehensive discussion of LIM and DCM operations and functionality, the above-referenced Tekelec publications can be consulted.

In general, a GPM card provides the control and database processes necessary to perform the required network address translations to achieve the porting control routing functionality implemented by embodiments of the present invention. The GPM **340** shown in Figure 4 is comprised, in part, of a signaling connection control part (SCCP) sub-module **342,** which further includes a G-Port™ subsystem controller known as a signaling connection routing controller (SCRC) process **344.** Responsibilities of the SCRC process **344** include, but are not limited to: the directing of an incoming SS7 message packet to either a G-Port™ database process **346** or a global title translation (GTT) database process **348,** the modification of a message packet to include routing information returned by the G-Port™ or GTT database processes **346** and **348,** respectively, and the creation of a new message packet in response to information returned by the G-Port™ database process **346.**

This ability to create a new message in response to information returned from the G-Port™ database is a particularly novel and significant aspect of the present invention. SS7 message packets leaving SCRC process **344** are received and further processed by an HMRT process 350. HMRT process **350** is responsible for the external routing of SS7 message packets that do not require additional processing by the PCR node **302.** That is, the HMRT process **350** determines to which LIM or DCM card an SS7 message packet should be routed for subsequent outbound transmission. It will also be appreciated from Figure 4 that in one embodiment GPM **340** is coupled to and serviced by an external provisioning application platform (EPAP) subsystem **360** via an Ethernet connection. EPAP subsystem **360** is responsible for administration and maintenance of the G-Port™ and GTT databases accessed by processes **346** and **348,** respectively.

### G-Port™ Service Module Architecture

As identified previously, one problem associated with load sharing and number porting among multiple HLR nodes is that conventional MSCs and GMSCs are only capable of block-based addressing. As such, it will be appreciated that one of the primary objectives of the PCR node according to an embodiment of the present invention is to provide a method by which a network operator can quickly and easily direct signaling messages associated with a given called party to a particular mobile services node (e.g., HLR, VLR, EIR, AuC, SMSC, etc.). To facilitate such signaling message re-direction, the PCR node of the present invention employs a pair of complementary routing databases which effectively map an IMSI, MSISDN, or called party identifier associated with a signaling message to the network address of the appropriate switching point (STP, SG, MSC, etc.) or mobile service node (e.g., HLR, VLR, EIR, AuC, SMSC, etc.). These databases, described above, are referred to as the G-Port™ database, and the GTT database. With regard to the called party identifier, it will be appreciated that such an identifier could include an email address (e.g., jdoe@tekelec.com), uniform resource locator (e.g., www.tekelec.com), Internet protocol (IP) address (e.g., 101.100.100.100 Port 23), or other functionally similar parameter which identifies a called party. Such called party identifiers may be employed in non-SS7 signaling protocol messages, such as a SIP message.

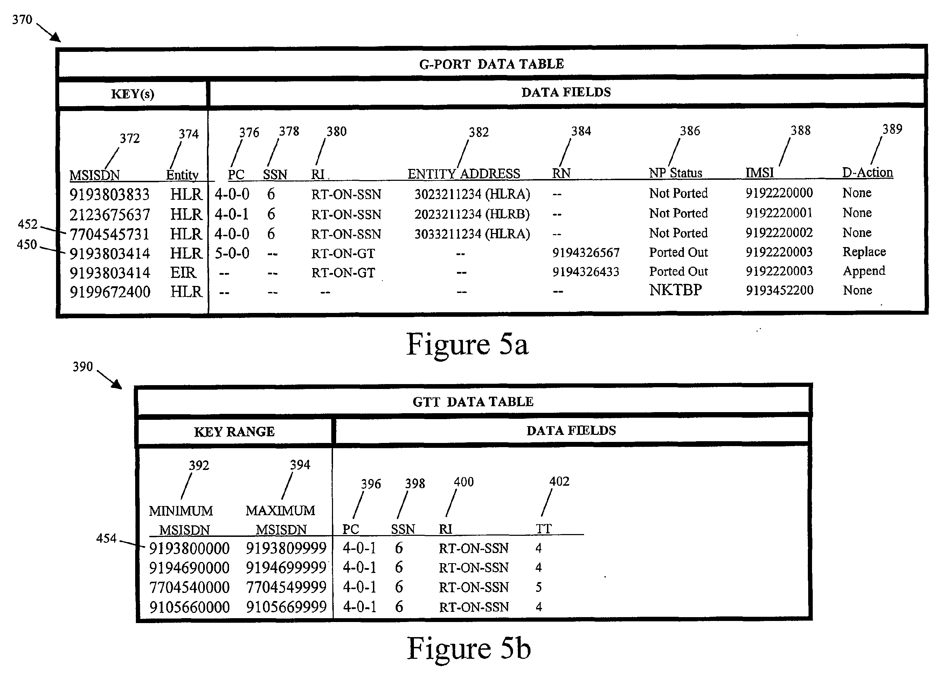

Figures 5a and 5b are database structure diagrams which are intended primarily to illustrate the key or indexing structures of sample G-Port™ and GTT database tables **370** and **390,** respectively. It is understood that the actual G-Port™ and GTT databases may include multiple tables and other data structures. Database tables **370** and **390** are intended to illustrate exemplary database fields used in formulating mobile query response messages according to embodiments of the present invention.

The sample routing rule exceptions-based G-Port™ database table **370** is comprised of several fields including a called party identifier (CPI) key field **372,** an entity type indicator key field **374,** a point code (PC) field 376, a subsystem number (SSN) field **378,** a routing indicator (RI) field **380,** an entity address field **382,** a routing number (RN) field **384,** a number portability (NP) status field **386,** an IMSI field **388,** and a digit action (D-Action) field **389.**

With particular regard to MSISDN key field **372,** it should be noted that in an alternate embodiment, the MSISDN key filed could include a continuous range or block MSISDN values. As such, a range or block of MSISDN values may be designated as "exceptions" to the default routing rules defined in the associated GTT database table 390. With regard to the entity type indicator field **374,** it will be appreciated that this field enables the G-Port™ database to respond with different routing instructions depending upon the type of mobile service that is required. For instance, an HLR-destined signaling message associated with the MSISDN (919) 380-3414 will obtain different routing instructions from the G-Port™ database than an EIR-destined signaling message associated with the same MSISDN, as indicated in Figure 5a.

Furthermore, a PCR node of the present invention is adapted to respond differently to different types of messages in certain cases. For instance, in the case of an SRI signaling message associated with a call to a ported subscriber, the PCR node may generate and route a new SRI Acknowledge (SRI Ack) message instead of simply routing or re-directing the original SRI message. The ability to not only route / re-direct signaling messages, but to create new signaling messages based on information stored in the G-Port™ database is a significant aspect of a PCR of the present invention.

The digit action field **389** is provides a mechanism whereby an operator may specify whether routing information obtained from a G-Port™ database lookup for a particular MSISDN entry is used to replace existing global title digit information in the received message, is appended to the existing global title digit information, or is simply not inserted into the received message.

The sample default routing rule GTT database table **390** is comprised of several fields including minimum and maximum MIN key fields **392** and **394,** respectively, a point code (PC) field 396, a subsystem number (SSN) field **398,** a routing indicator (RI) field **400,** and a translation type (TT) field **402.**

Again, it should be appreciated that the G-Port™ and GTT database record structures and pseudo data presented in Figures 5a and 5b, while supportive of the examples presented in this disclosure, are merely illustrative of the basic information necessary to perform the required routing data lookups. In practice, the actual database record structures and overall database design may vary according to particular implementation and system performance requirements.

The complementary database access scheme employed by the PCR node of the present invention requires that the GTT database table 390 maintain a set of range or block-based default routing rules while the G-Port™ database table **370** contains exceptions to the block-based default routing rules. By range or block-based routing rules, it is meant that a block or range of mobile identification numbers (e.g., IMSI, MSISDN, etc.) are associated with the network address of a particular HLR, EIR, AuC, service control point (SCP), etc. Such a range-based routing rules database structure is similar to the routing database structures commonly employed in conventional GMSC nodes, as described above. Furthermore, a similar complementary default-exception routing database scheme is described in the above-referenced U.S. Patent Application No. 09/471,946, filed December 23, 1999, entitled *Methods And Systems For Routing Messages In A Communications Network.*

Referring to Figure 5b, the GTT or range-based default database table **390** includes key fields in the left hand column and data fields in the right hand column. The key fields represent ranges of mobile identification or MSISDN numbers associated with a particular node. For example, the first key field specifies a minimum MSISDN value of (919) 380-0000 and a maximum MSISDN value of (919) 380-9999. The routing data fields corresponding to this MSISDN range include a point code (PC) value of 4-0-1, a subsystem number (SSN) value of 6, a routing indicator (RI) value of route on subsystem number (RT-ON-SSN), and a translation type (TT) value of 4. The data included in the data fields are merely illustrative of data fields that can be included in the range-based, default GTT database table **390.** Similar key fields and data fields are shown for other sample MSISDN value ranges.

Referring to Figure 5a, the G-Port™ or exceptions-based database table **370** contains entries that are exceptions to the entries in the range-based default routing database table **390.** In Figure 5a, the left-hand column includes a key MSISDN value, and the right-hand column includes data fields for each MSISDN entry. Again, it should be noted that in an alternate embodiment, the key MSISDN value could include a continuous range or block of "exception" MSISDN values. In the particular example shown in Figure 5a, the first entry includes a key field MSISDN value of (919) 380-3833 and an entity type key value of "HLR". The data fields corresponding to the first entry include a PC of 4-0-0, an SSN value of 6, an RI value of RT-ON-SSN, a digit action (D-Action) value of "none", an Entity Address 303211234 representing the mobile service entity, HLR A, a number portability status value of "Not Ported", and an associated IMSI identifier value of 9192220000. Again, these data fields are merely illustrative of the data fields that can be included in the exception-based or G-Port™ database table **370**.

The dual database architecture employed in the PCR node of the present invention provides a number of subtle benefits to the network operator. For example, the complementary nature of the two databases optimally minimizes routing database memory resource requirements. Furthermore, the task of maintaining and administering the flexible routing node is greatly simplified, in that only exceptions to the conventional block-based routing rules must be explicitly entered into the G-Port™ database. If such were not the case and, for example, a particular network operator had data associated with 500,000 mobile subscribers stored in a one or more HLRs, the network operator would be required to create and store at least one unique routing record for each of the 500,000 subscribers. The exceptions-based structure of the flexible routing node database system simply requires, in such a case, that the operator create and store individual routing records in the G-Port™ database only for those MSISDN numbers that do not adhere to the range or block-based rules that have been specified in the GTT database. For example, if a number is ported from one HLR to another HLR, the MSISDN number may be an exception to the block based rules in the second HLR. In the special case where all of the operator's MSISDN numbers adhere to the block-based rules specified in the GTT database, the G-Port™ database would be empty. At the other extreme, where all of the operator's MSISDN numbers do not adhere to the general block-based rules specified in the GTT database, the G-Port™ database would contain at least one entry for each of the operator's assigned MSISDN numbers.

A PCR node according to the present invention facilitates load sharing among multiple HLRs. For example, if a service provider originally has two HLRs in service and subsequently purchases a third HLR, the G-Port™ database allows numbers allocated to the original HLRs to be quickly and easily re-allocated to the third HLR, so as to generally equalize signaling traffic between the three HLR nodes.

### G-Port™ Service Module Operation

With particular regard to G-Port™ and GTT translation services, the parameters used either directly or indirectly to determine the type of translation service (e.g., G-Port™ service or GTT service) required by an incoming signaling message include, but are not limited to, a routing indicator (RI), a domain indicator (DI), global title indicator (GTI) parameter, a translation type (TT) parameter, a numbering plan (NP) parameter, and a nature of address indicator (NAI) parameter. For example, in one embodiment, a PCR node may be configured such that a received SS7 signaling message with a GTI value of 4, a TT value of 10, an NP value of 1, and an NAI value of 3 obtains G-Port™ processing. These parameters, their meanings within the context of an SS7 communication network, and their range of values are well known to those skilled in the art and consequently will not be discussed in detail. It should suffice to say that the preferred embodiment of a PCR node of the present invention relies on some or all of these parameters to determine the need for G-Port™ translation service. With particular regard to the domain indicator (DI), it will be appreciated that this value indicates whether the message is in an ANSI or an ITU format, and may further indicate the national or international character of the message. Such information may be obtained by both explicit and implicit means from a received signaling message.

Once the need for G-Port™ processing has been determined, the specific type of translation service or mobile service entity type is next determined. With particular regard to G-Port™ translation services, the types of services available could include GSM services, such as HLR, EIR, AuC, SMSC, etc. Determination of the specific G-Port™ translation service is made through examination of a subsystem number (SSN) parameter that is contained in the SCCP called party address (CdPA) field of the signaling message. Once again, the SSN parameter is well known to those skilled in the art and consequently will not be discussed in detail herein. It should suffice to say that the flexible routing node of the present invention is configured to recognize certain SSN values as indicating the need for a particular type of G-Port™ translation service.

From an operational standpoint, signaling messages requiring routing database processing are first serviced by the exception-based G-Port™ database. That is, a lookup is performed in the G-Port™ database based on the designated mobile service entity type and an MSISDN number associated with the incoming signaling message packet. Assuming that a match is found in the G-Port™ database, it will again be appreciated that subsequent G-Port™ processing will be determined by the type of the original received message. With regard to SS7 transaction capabilities application part (TCAP) based signaling messages, message type may be determined through examination of a TCAP operation (OP) code value contained within the message. In the example scenarios described and discussed herein, send routing information (SRI) and short message service (SMS) message types are employed, and the outcome of G-Port™ processing may vary depending upon which message type is received by the PCR. However, it will be appreciated that many types of signaling messages are defined and currently employed within GSM, PCS, and IS-41 wireless communication networks, and that a PCR node of the present invention may be adapted to accommodate any number of signaling message types.

In any event, if during a lookup operation, an MSISDN and entity type match is located in the G-Port™ database, the appropriate routing data is returned by the G-Port™ database and the signaling message packet is modified accordingly before further routing. No secondary search of the block-based GTT database is required in such a case. However, in the event that no MSISDN match is located in the G-Port™ database, a secondary search is performed in the default range-based GTT database.

### G-Port™ Translation

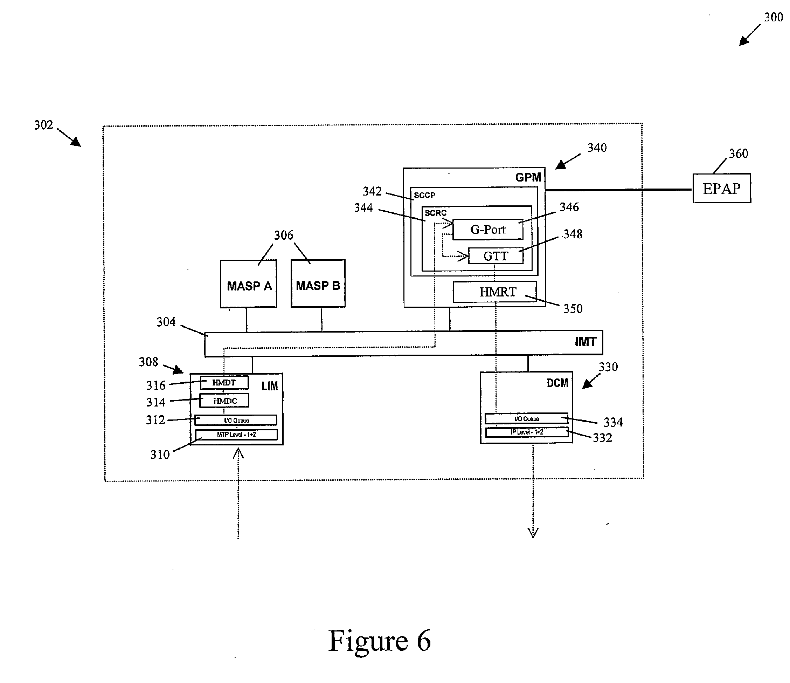

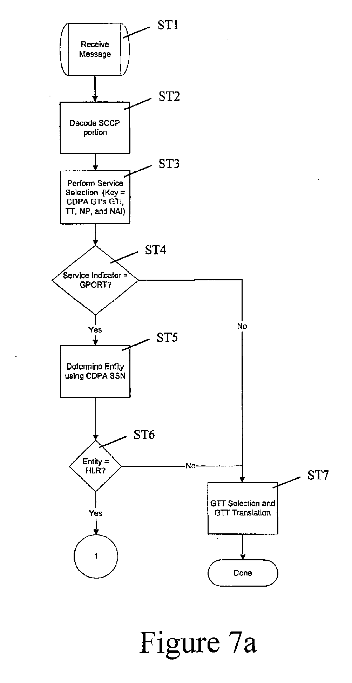

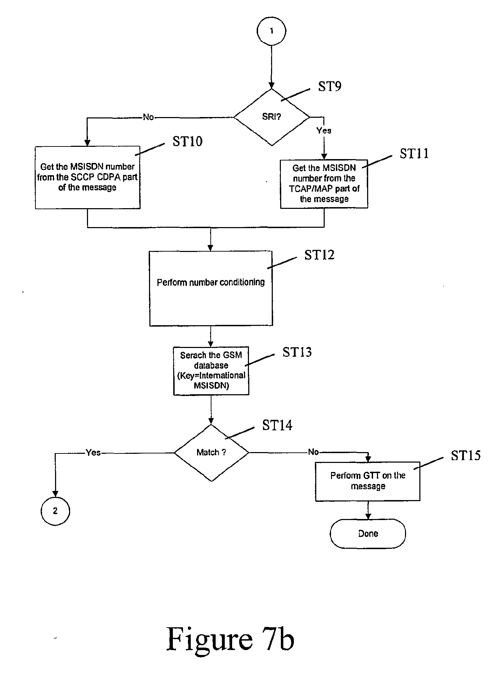

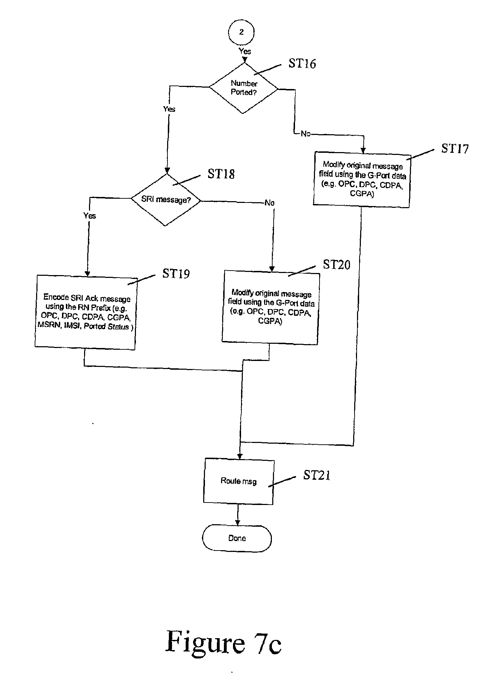

Figures 4 and 6 generally illustrate the two routing database access scenarios briefly described above, while Figures 7a - 7c present a flow chart of the associated message processing steps. More particularly, Figure 4 diagrams the case where the initial G-Port™ database lookup finds an MSISDN and entity type match and hence no secondary GTT database search is required. To illustrate this case, the path of a typical HLR-bound SS7 signaling message is traced through the PCR node **302,** with the path being indicated by a dashed line in Figure 4.

Referring to Figure 6, beginning at the inbound LIM card **308,** a signaling message is received and SS7 MTP Level 1 and 2 processing is performed on the incoming signaling message packet by the MTP Level 1 and 2 process **310.** With MTP Level 1 and 2 processing complete, the signaling message packet is temporarily buffered in the I/O queue **312** before being passed up the stack to the MTP Level 3 HMDC process **314.** HMDC process **314** examines the signaling message packet and determines whether the packet requires further processing at the PCR node **302.** In one embodiment, HMDC process **314** is adapted to examine destination point code (DPC) and service indicator octet (SIO) parameters contained within the message transfer part (MTP) header of an SS7 signaling message packet. In the event that a signaling message includes a DPC value corresponding to the SS7 network address of the PCR node and an SIO value corresponding to that of an SCCP type message, the message is identified as potentially requiring G-Port™ processing. In the example shown in Figure 4, it is assumed that HMDC process **314** examines the DPC and SIO values associated with the received signaling message and subsequently determines that further processing of the message packet is required. As such, the message packet is passed to the HMDT process **316.** The HMDT process **316** examines the packet and determines, which distributed processing module connected to the IMT bus **304** should next receive the packet. In this case, the HMDT process 316 determines that the signaling message should be forwarded to GPM module **340** for G-Port™ processing. The signaling message packet is then placed on the high speed IMT bus **304** and sent to GPM **340.**

Referring to Figures 7a-7c, in step **ST1,** the signaling message arrives at GPM card **340** and SCCP process **342** receives the packet. Within SCCP process **342,** the message packet is passed to the SCRC controller process **344.** In steps **ST2** and **ST3,** respectively, SCRC process **328** decodes and examines packet content information contained within the signaling message header in order to establish which type of translation service is required. More particularly, the routing indicator (RI) parameter contained within the signaling message packet is analyzed to determine whether G-Port™ subsystem processing is indicated. In one embodiment, an RI value of "RT-ON-GT" indicates that G-Port™ processing is required.

Assuming an RI value of "RT-ON-GT" is included in the received signaling message, the packet is next passed to G-Port™ process **346** where the GTI, TT, NP, and NAI parameters contained within the signaling message packet are analyzed to determine whether G-Port™ or GTT translation service is required. In the scenario presented in Figure 4, it is assumed that the received signaling message includes an RI value of "RT-ON-GT", a GTI value of 4, a Translation Type (TT) value of 10, a "national" NAI value of 3, and an "E.164" NP value of 1, and these values are collectively interpreted as indicating the need for a G-Port™ service (**ST4**). The signaling message content is then further analyzed to determine the specific mobile service entity type or type of G-Port™ translation service required, as indicated by step **ST5.** More particularly, the CdPA SSN parameter is examined, and the value of 6 is interpreted as indicating the need for a G-Port™ HLR type translation. In this particular example, if the designated mobile service entity type is determined to be anything other than an HLR (i.e., SSN not equal to 6), the packet is passed to the GTT database process **348** as indicated in steps **ST6** and **ST7,** respectively. In processing step **ST9,** a determination is made with regard to how an MSISDN value should be extracted from the signaling message. In the particular embodiment presented herein, it is assumed that a signaling message packet is either an SRI message or a non-SRI message. As such, if a signaling message is identified as non-SRI (**ST10**), the MSISDN value is extracted from the SCCP CdPA field of the message. The MSISDN is typically stored within the CdPA field in a structure commonly referred to as the global title digits (GTD) sub-field. If the signaling message is identified as an SRI message **(ST11),** the MSISDN value is extracted from the TCAP /MAP MSISDN Digits field of the message.

In any event, the MSISDN number encoded within the packet is subsequently examined and conditioned, as necessary (ST12). With particular regard to the above mentioned number conditioning, such processing may be necessary to ensure that the MSISDN is compatible with the format of the key field data stored in the G-Port™ and GTT databases, respectively. Number conditioning operations might include deleting extra prefix digits or pre-pending extra digits to a MSISDN contained within a signaling message packet so as to force the number to conform to an international format. Conversion of a mobile identification number from one numbering standard to another may also be performed. For instance, the MSISDN associated with an incoming signaling message packet may be converted from a first industry standard format known as E.214 to a second industry standard format known as E.212 prior to database lookup operations. Once again, it should be appreciated that such MSISDN conditioning services are necessary only in the case that the format of the incoming message MSISDN is not consistent with the corresponding key field data format in the G-Port™ and GTT databases.

In step **ST13,** the G-Port™ database is searched using the MSISDN as at least a portion of the search key. In one embodiment, the G-Port™ database may utilize a data table structure similar to table 370 shown in Figure 5a. The key field structure of G-Port™ data table 370 includes an entity type key field **374,** as previously discussed. However, it will be appreciated that in an alternate embodiment of the present invention, G-Port™ database may include multiple data tables, where each table contains data associated with a particular entity type (e.g., HLR, EIR, AuC, SMSC, etc.). With such a database structure, each table could be keyed or indexed on MSISDN values only.

With regard to the G-Port™ database search, it is assumed in the example presented in Figure 4 that a match is found (**ST14**) in the G-Port™ database (i.e., there is an entry in the G-Port™ data table **370** corresponding to the message's CdPA SSN value). Processing of the original received signaling message from this point forward depends both on the type of the original received message and the ported status of the MSISDN value associated with the message **(ST16).** More particularly, if the MSISDN associated with the original received message is determined to have not been ported out of the network being serviced by the PCR node (i.e., not ported, not known to be ported, or ported in), then the routing data returned by the G-Port™ database process is subsequently encoded within the original signaling message packet, as indicated by step **ST17,** and the modified message is directed from the GPM card **340** via HMRT process **350** to outbound DCM card **330** for transmission from the PCR node (**ST21**). It will be appreciated that the routing information returned by the G-Port™ database effectively constitutes the network address of an intermediate (e.g., signal transfer point, signaling gateway, packet router, etc.) or final destination node (HLR, EIR, AuC, SMSC, etc.). If, however, the MSISDN associated with the original received message is determined to have been ported out of the network being serviced by the PCR node (ST16), then the next processing step is dependent on the type of the original received message. In one embodiment of the present invention, if the original received message is determined to be a send routing information (SRI) message (**ST18**) then a new, SRI acknowledge message (SRI Ack) is created and encoded using, in part, the information returned from the G-Port™ database lookup (**ST19**), and this new message is subsequently routed from the PCR node in a manner similar to that described above. If the original received message is determined to be anything other than an SRI message, then the original message is modified to include the routing information obtained from the G-Port™ database lookup operation, and the modified message is subsequently routed from the PCR node.

Once again, it will be appreciated that with SS7 TCAP-based signaling messages, message type may be determined through examination of a TCAP OP code value contained within the message. In the example scenarios presented above, new message creation is described only for the case of an SRI message associated with a subscriber that has been ported out of the PCR node operator's network. However, it will be appreciated that a PCR node of the present invention may be adapted to trigger the creation of a new signaling message in response to the receipt and processing of a non-SRI message that is associated with a subscriber that has been ported out of the PCR node operator's network. Again, many other types of mobile signaling messages are defined and currently employed within GSM, PCS, and IS-41 wireless communication networks, and that a PCR node of the present invention may be adapted to accommodate any number of signaling message types.

### PCR Operating Scenarios

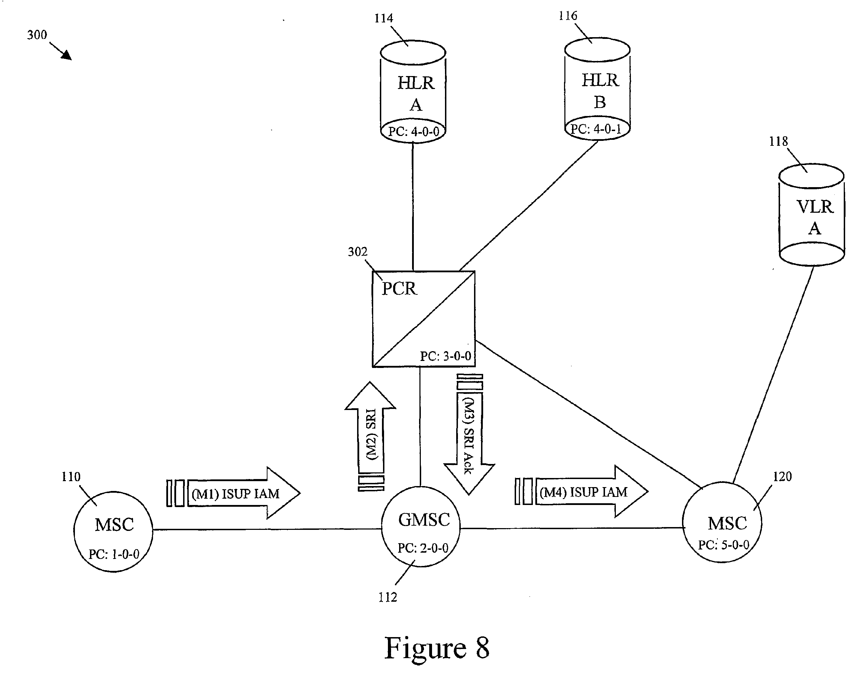

Figures 8 through 15 illustrate several example message routing scenarios associated with a PCR node of the present invention. The sample G-Port™ and GTT data tables **370** and **390,** respectively, shown in Figures 5a and 5b, respectively, are used to assist in the illustration of the above mentioned example scenarios.

The first message routing scenario, presented in Figure 8, illustrates the processing of a send routing information (SRI) signaling message by a PCR node of the present invention. More particularly, Figure 8 includes a mobile communications network, generally indicated by the numeral **300.** Network **300** is comprised of an originating mobile switching center (MSC) **110,** a gateway MSC **112,** a terminating MSC **120,** a first home location register (HLR) **114,** a second HLR **116,** a visitor location register (VLR) **118,** and a PCR node **302.** These nodes are connected via signaling links, as indicated in Figure 8, although it will be appreciated that different signaling link types may be employed between different nodes. For instance, the signaling link connection between MSC **110** and GMSC **112** may be a conventional SS7 - MTP type signaling link, while the signaling link between PCR **302** and HLR **114** may be a transport adapter layer interface (TALI) - TCP/IP or stream control transmission protocol (SCTP) - IP type signaling link.

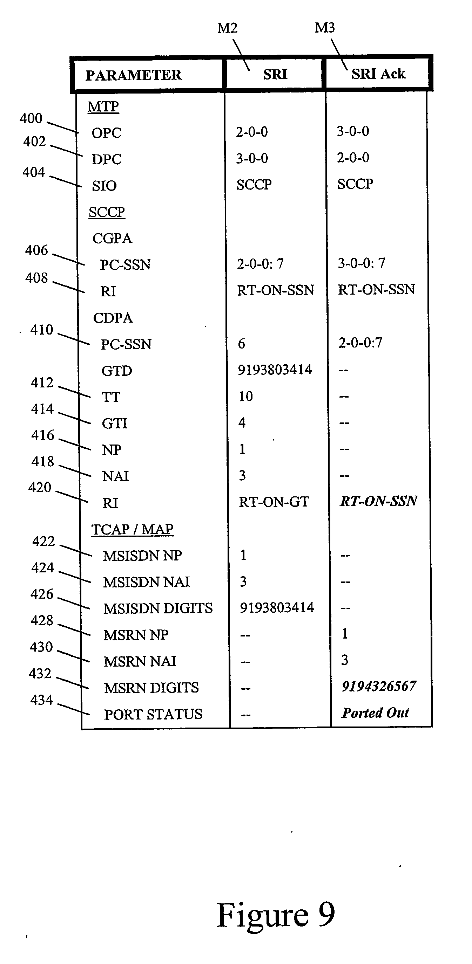

In any event, for the purposes of illustration, MSC **110** is assigned an SS7 point code (PC) of 1-0-0, GMSC **112** is assigned a point code of 2-0-0, MSC **120** is assigned a point code of 5-0-0, HLR **114** is assigned a point code of 4-0-0, HLR **116** is assigned a point code of 4-0-1, and PCR node 302 is assigned a point code of 3-0-0. As such, MSC **110** is adapted to generate and launch an ISDN user part (ISUP) initial address message (IAM) **M1** in response to a call setup request by a mobile calling party. GMSC **112** receives ISUP IAM message **M1** and subsequently generates and launches an SRI query message **M2.** A partial listing of the contents of this sample SRI query message are presented in Figure 9. It will be appreciated that SRI message **M2** is MTP addressed to a destination point code (DPC), 3-0-0, which corresponds to the PC address of the PCR node **302.** As such, the SRI message **M2** is transmitted to and generally received by PCR node **302** via an interconnecting signaling link. Upon receipt by the PCR node **302,** SRI message **M2** is processed at the GPM card **340** in a manner similar to that previously described and generally illustrated in Figure 4. That is, SRI message **M2** is received at SS7 LIM **308** and subsequently examined by the HMDC process **314.** As discussed previously, in one embodiment, HMDC process **314** is adapted to examine an MTP DPC parameter **402** value and a service indicator octet (SIO) parameter **404** value contained in the received message packet in order to determine whether further internal SCCP-type processing is required. In this example, the DPC of the received message M2 is equal to the point code address of the PCR node, 3-0-0, and the SIO value indicates that the packet contains an SCCP-type message. Since message M2 is addressed to the PCR node **302** and the message is an SCCP-type message, HMDC process **314** passes the packet to HMDT process **316** with instructions to deliver the message to an available SCCP card (e.g., GPM) for further processing. Consequently, the message **M2** is delivered via IMT bus **304** to the available GPM card **340** for processing.

Once received by GPM **340,** the SCCP portion of the message M2 is decoded, and a service selection check is performed by the resident SCRC process **344.** More particularly, called party (CdPA) routing indicator (RI) parameter **420** contained within SRI message **M2** is analyzed to determine whether G-Port™ subsystem processing is necessary. As indicated in Figure 9, SRI message **M2** includes a CdPA RI value of "RT-ON-GT", which indicates the need for G-Port™ processing. The packet is then passed to G-Port™ database process **346** where TT **412,** GTI **414,** NP **416,** and NAI **418** parameters contained within the signaling message packet are analyzed to determine whether G-Port™ or GTT translation service is required. In this example scenario, message M2 GTI value of 4, translation type (TT) value of 10, "national" NAI value of 3, and "E.164" NP value of 1, are collectively interpreted as indicating the need for a G-Port™ service. CdPA SSN parameter **410** is next examined to determine the specific mobile service entity type or type of G-Port™ translation service required. More particularly, the SSN value of 6 is interpreted as indicating the need for a G-Port™ HLR entity-type translation. An MSISDN value associated with the called party is next extracted from TCAP / MAP MSISDN Digits field **426** of the message after identifying the message as SRI.

The G-Port™ database is subsequently searched using the called party MSISDN value as at least a portion of the search key. From Figures 5a and 9, it will be appreciated that a lookup in the G-Port™ database data table **370** using the called party MSISDN digits parameter **416** value, (919) 380-3814, and HLR entity-type results in a match with the fourth entry or record **450** in data table **370.**

As indicated by the G-Port™ data included in record **450,** the called party MSISDN associated with original received SRI message **M2** is determined to have been ported out of the network being serviced by the PCR node **302,** and a new SRI acknowledge (SRI Ack) message is created. This new SRI Ack message **M2** is encoded using, in part, the information returned from the G-Port™ database lookup. Among the many parameters in the new SRI Ack message **M2** that are set by the PCR node, of particular significance are CdPA RI parameter **420,** MSRN digits parameter **432,** and the Port Status parameter **434.** As illustrated in Figure 9, the CdPA RI parameter is set to "RT-ON-SSN", which indicates that no further global title type translation is required in order to route message M2 to the final destination node. MSRN digits parameter **432** is set to the routing number of the MSC that is presently serving as the "ported" called party's home MSC, and the Port Status parameter **434** of the new message is set to "Ported Out". Once construction of SRI Ack message **M2** is complete, it is passed from the GPM card **340** to the appropriate outbound LIM or DCM in a manner similar to that described above. In this particular scenario, it will be appreciated that new SRI Ack message **M2** is routed back to GMSC **112,** which generated the original SRI message **M1**. GMSC **112** subsequently uses information contained in SRI Ack message **M2**, to modify routing information in the original ISUP IAM message **M1**. The modified ISUP IAM message is then routed on to its final destination.

The message routing scenario presented in Figure 8 and generally described above illustrates one of the key aspects of the present invention. That is, a PCR node of the present invention is adapted to effectively intercept an SRI signaling message that is destined for a mobile service node (e.g., HLR) and determine whether access to the requested mobile service node is actually necessary. More particularly, a PCR node is adapted to determine whether a received signaling message is associated with a called party that has been ported out of a service area or network. In the case of a communication protocol or interaction that requires a GMSC to generate and transmit a first signaling query message to a mobile service node and subsequently receive a signaling reply message from the mobile service node, a PCR node of the present invention is adapted to respond to the GMSC node with the signaling reply message on behalf of the mobile service node in the event that the called party associated with the signaling query message has been ported out of the network area serviced by the GMSC. Such is the case in the above-illustrated SRI - SRI Ack communication sequence scenario. However, it will be appreciated that other similar communication sequence scenarios involving signaling messages other than SRI - SRI Ack type messages could also be accommodated by a PCR node. As such, a PCR node of the present invention is able to minimize or eliminate altogether the monopolization of mobile service node resources by signaling message traffic associated with ported mobile subscribers that are no longer serviced by a mobile service node in the PCR node's local service area.

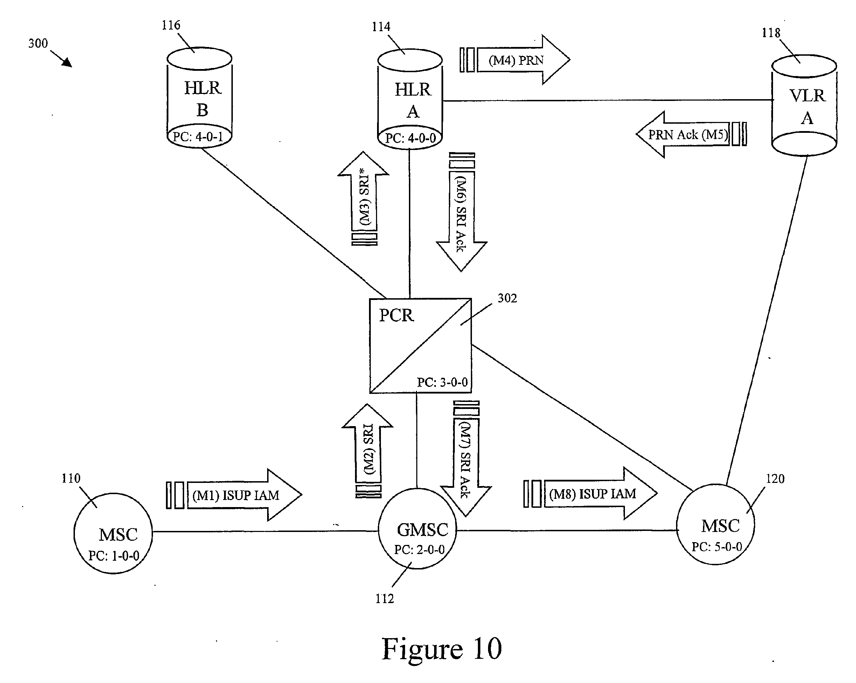

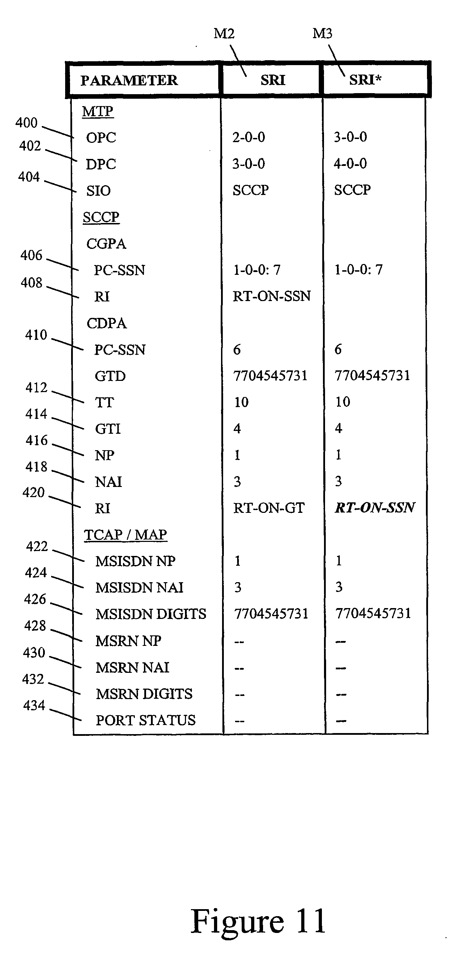

Presented in Figure 10 is a signaling scenario that is closely related to the scenario discussed above and generally illustrated in Figure 8. In the Figure 10 scenario, GMSC **112** generates and transmits an SRI signaling message to PCR node **302.** Within PCR node **302,** the message is received by LIM **308** and processed in a similar manner as that described above in the previous scenario. That is, SRI message **M2** is examined by processes on LIM **308** and it is determined that internal routing to GPM card **340** is required. Message **M2** is received and processed by the SCCP and SCRC processes **342** and **344,** respectively, in a manner that is similar to that described for the previous scenario. Once again, examination of the RI, TT, GTI, NP, NAI, and SSN parameter values collectively indicate that G-Port™ processing is required. In this case, however, it will be appreciated from the message content diagram shown in Figure 11, that the called party MSISDN number is (770) 454-5731, and as such, a search of the G-Port™ database data table **370** results in a match with the third entry or record **452.** It will be appreciated from the sample data shown in table **370,** that the mobile subscriber corresponding to MSISDN number (770) 454-5731 has not been ported, and is in fact being serviced by the HLR node **114.** As a result of this finding, the original SRI message **M2** is simply modified to include the routing information necessary to insure delivery to HLR node **114.** At this point, it should be noted that if the MSISDN number (770) 454-5731 were not identified as being associated with an exception to the default routing rules stored in the range-based "default" GTT data table, then the SRI message **M3** would have been modified so as to include a destination routing address corresponding to the HLR node **116.** This is the case because mobile subscribers corresponding to the range of MSISDN numbers from (770) 454-0000 through (770) 454-9999 have been assigned to HLR node **116,** as indicated in GTT data table **390** of Figure 5b. As discussed previously in this disclosure, such re-distribution or re-allocation of HLR subscriber information may be implemented by a network operator in an effort to load share signaling traffic across multiple HLR resources.

In any event, in this case, DPC **402** of modified SRI message **M3** is set to the network address of destination HLR node **114,** as indicated in Figure 11. Routing indicator parameter **420** is also changed from the original value of "RT-ON-GT" to the new value of "RT-ON-SSN", thereby indicating that no further routing address translations are required in order to deliver the message to the final destination. Modified SRI message M3 is subsequently passed from GPM **340** via HMRT process **350** to the outbound DCM card **330,** as generally illustrated in Figure 4. It will be appreciated that in this scenario, it is assumed that the signaling link connection between PCR node **302** and HLR node **114** is employs an IP-based protocol (e.g., TALI). As further illustrated in Figure 10, HLR node **114** receives the modified SRI message **M3** sent by PCR node **302** and subsequently generates a provide routing number (PRN) query message **M4.** PRN message **M4** is routed to the VLR node **118** that is currently servicing the called mobile subscriber. VLR node **118** responds to the PRN query with a PRN acknowledge (PRN Ack) message **M5**, which includes the desired routing number (RN) information associated with the MSC that is currently servicing the called mobile party. HLR node **114** receives PRN Ack message **M5** and formulates an SRI Ack message **M6** which serves as a response to the original SRI message **M2.** The SRI Ack message **M6** is subsequently routed back to GMSC 112 via the PCR node **302.** With regard to SRI Ack message **M6,** it will be appreciated that no G-Port™ type processing is performed on this message, and that PCR node **302** simply routes the message **M6** to GMSC **112.** At this point, GMSC **112** receives the SRI Ack message M6 and proceeds with the call setup signaling process in a manner similar to that described above in the previous scenario.

Thus, in this case, a PCR node of the present invention is adapted to effectively intercept an SRI signaling message that is destined for a mobile service node (e.g., HLR) and determine whether mobile service information associated with a called mobile subscriber is stored in a mobile service node location that corresponds to a set of default or range-based routing rules or whether the desired mobile service information is stored in a mobile service node location that is that corresponds to an exception to the set of default or range-based routing rules. In other words, a PCR node of the present invention is adapted to distinguish between a mobile subscriber whose service information has been ported out of a particular service area, and a mobile subscriber whose service information has simply been ported between mobile service nodes that are themselves all within the same service area (i.e., serviced by the same GMSC).

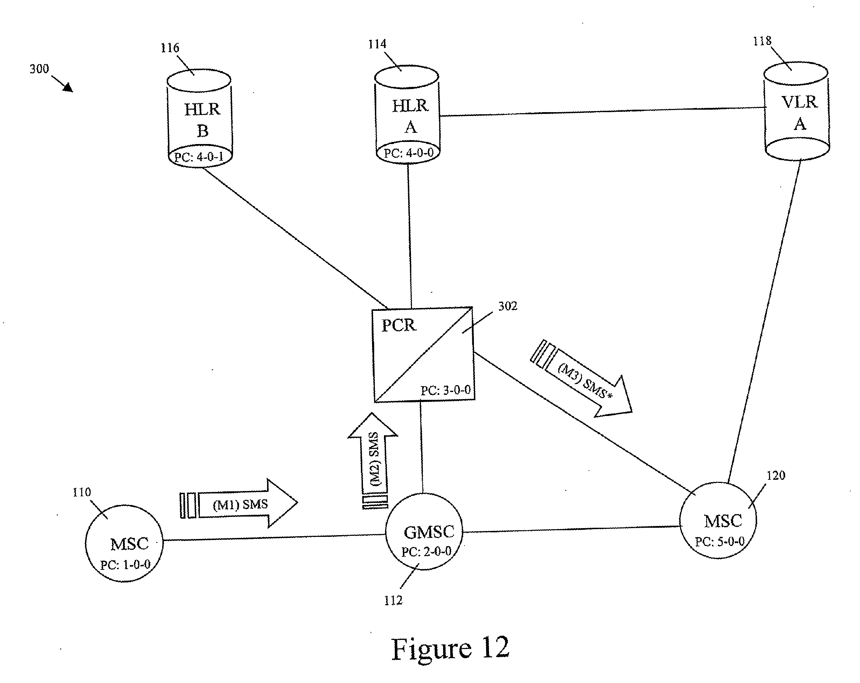

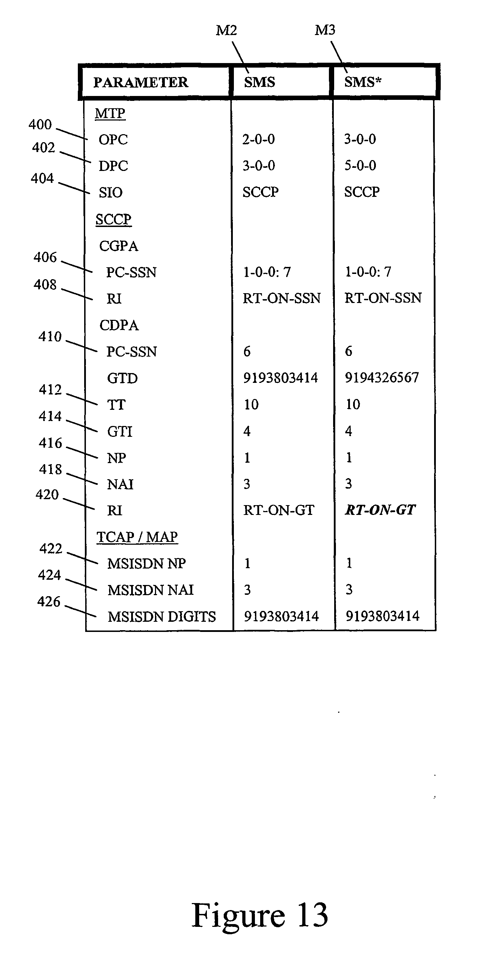

Presented in Figure 12 is another significant signaling scenario that is accommodated by a PCR node of the present invention. In this case, the GMSC node **112** receives a short message service (SMS) signaling message **M1** from MSC **110.** It should be appreciated that, in this situation, an explicit reply message is not required in response to SMS message **M1.** Instead, SMS message **M1** may simply be routed to the intended destination (i.e., the receiving mobile subscriber's pager or handset). As such GMSC **112** receives SMS message **M1** and subsequently routes the message to PCR node **302.** LIM **308** processing and internal routing of SMS message **M2** within PCR node **302** is similar to that described in the previous scenarios, and hence will not be described in detail again here. It should suffice to say that the SMS message is identified as requiring SCCP type processing within the PCR node **302** and, consequently, message **M2** is internally routed to GPM card **340.** SCCP and SCRC processes **342** and **344,** respectively, are again invoked as previously described and the message is determined to require G-Port™ processing. As indicated in the associated message content diagram of Figure 13, it will be appreciated that the "called" mobile subscriber is identified by an MSISDN digits parameter **426** value of (919) 380-3414. Once again, this called party MSISDN value is used to perform a lookup in G-Port™ data table 370, and in this example it is also assumed that the SMS message requires access to the HLR entity servicing the called party mobile subscriber before routing can be completed. As such, a lookup in G-Port™ database table 370 results in a match with the fourth entry or record **450,** as generally indicated in Figure 5a. Information stored in matching G-Port™ database record **450** indicates that the called party mobile subscriber has been ported out of the GMSC's local service area. In response to this determination, and the fact that an explicit response message is not required, original SMS message **M2** is simply modified to include the routing number (RN) associated with the MSC that is currently serving as the called party mobile subscriber's home MSC. In this example, modified SMS message **M3** is routed from PCR node 302 and on to the next "hop" in the routing process, which is MSC **120.** It should be noted that the routing indicator parameter **420** in the modified SMS message M3 remains set to "RT-ON-GT", thereby indicating that further address translation may be required at some point during the remainder of the routing process.

Once again, it will be appreciated that in such scenarios a PCR node of the present invention again is adapted to minimize or eliminate altogether the monopolization of mobile service node resources by signaling message traffic associated with ported mobile subscribers that are no longer serviced by a mobile service node in the PCR node's local service area.

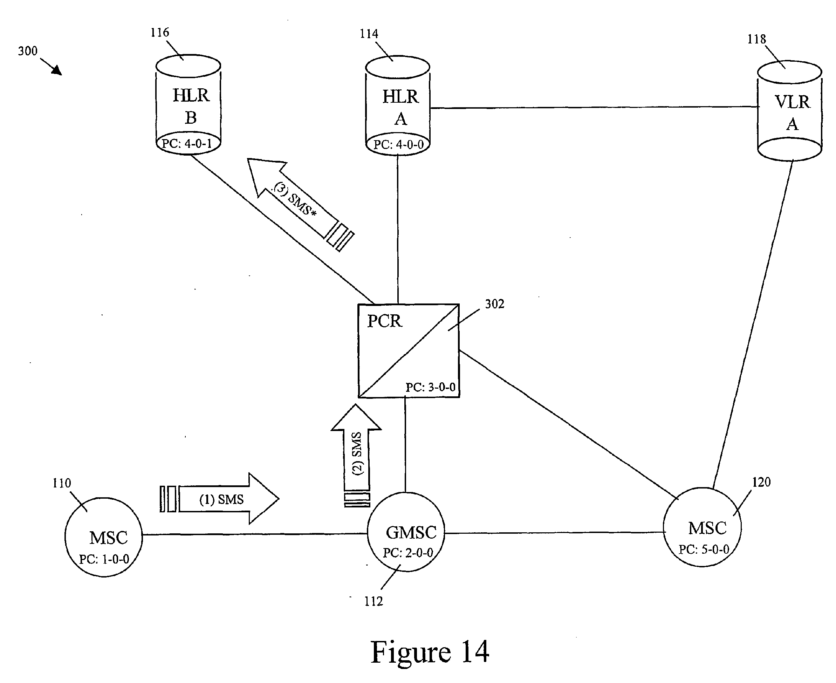

A final signaling scenario is illustrated in Figure 14 which corresponds closely to the second scenario that was presented and discussed in detail above. However, in this final example, it will be appreciated that the signaling message under consideration is an SMS type message, which as mentioned previously, is a type of signaling message that does not require an explicit, corresponding reply message. This final scenario again illustrates the value of a PCRs tandem routing database structure which includes both exception and default range-based data tables with regard to flexibly re-distributing or re-allocating mobile subscriber service information among multiple mobile service node resources.

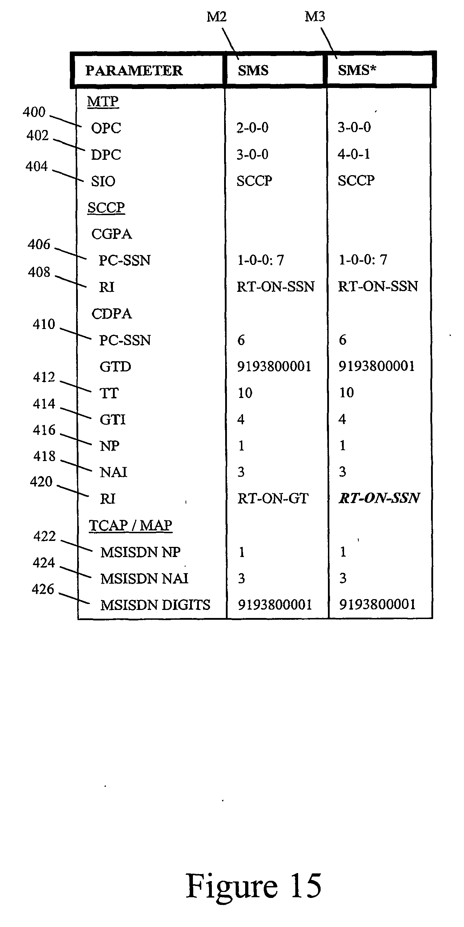

With regard to the particular example shown in Figure 14, it will be appreciated that MSC **110** transmits an SMS message **M1** to GMSC **112.** As such GMSC **112** receives SMS message **M1** and subsequently routes the message to PCR node **302.** Once again, LIM **308** processing and internal routing of SMS message M2 within the PCR node **302** is similar to that described in the previous scenarios. SMS message **M1** is identified as requiring SCCP type processing within the PCR node **302** and, consequently, message **M2** is internally routed to GPM card **340.** SCCP and SCRC processes **342** and **344,** respectively, are again invoked as previously described and the message is determined to require G-Port™ processing. As indicated in the associated message content diagram of Figure 15, it will be appreciated that the "called" mobile subscriber is identified by an MSISDN digits parameter **426** value of (919) 380-0001. Once again, this called party MSISDN value is used to perform a lookup in G-Port™ data table **370,** and in this example it is also assumed that the SMS message requires access to the HLR entity servicing the called party mobile subscriber before routing can be completed. As such, a lookup in G-Port™ database table **370** does not result in a match, as generally indicated in Figure 5a. As such, GTT data table **390** is subsequently searched, and a match is located at entry or record **454.** Information stored in the matching GTT database record **454** indicates that the called party mobile subscriber has service information stored in HLR node **116,** as generally indicated in Figure 5b. In response to this determination, and the fact that an explicit response message is not required, original SMS message M2 is simply modified to include the point code address associated with destination HLR node **116.** In this example, the modified SMS message **M3** is routed from the PCR node **302** and on to the next "hop" in the routing process, which is HLR **116.** It should be noted that the routing indicator parameter **420** in modified SMS message **M3** is set to "RT-ON-SSN", thereby indicating that no further address translation is required.

Furthermore, the foregoing description is for the purpose of illustration only, and not for the purpose of limitation―the invention being defined by the claims.

## Claims

1. A method for processing messages in a mobile communications network, the method comprising:
at a telecommunications network routing element (302) including SS7 signal transfer and mobile number portability processing capability node:
(a) receiving a message relating to a communication in a mobile communications network, the message including a called party identifier formerly associated with a subscriber record in a first HLR in a first service provider's network;
(b) analyzing information in the message to determine whether mobile number portability processing is required for the message;
(c) in response to determining that mobile number portability processing is required for the message, performing a lookup in a first database (370) located in the telecommunications network routing element (302) based on the called party identifier to determine whether the called party has been ported into a second service provider's network including a second HLR (114); and **characterized by**
(d) in response to determining that the called party has been ported into the second service provider's network, the inserting a point code of the telecommunications network routing element (302) in an originating point code field of the message and relaying the message to the second HLR (114).

2. The method of claim 1 wherein receiving a message includes receiving a signaling system 7 (SS7) signaling message.

3. The method of claim 2 wherein receiving an SS7 signaling message includes receiving an Internet-protocol-encapsulated SS7 signaling message.

4. The method of claim 1 wherein receiving a message includes receiving a send routing information signaling message.

5. The method of claim 1 wherein receiving a message includes receiving a session initiation protocol signaling message.

6. The method of claim 1 wherein the called party identifier includes a mobile subscriber ISDN number.

7. The method of claim 1 wherein the called party identifier includes a telephone number associated with a wireline network subscriber.

8. The method of claim 1 wherein the called party identifier includes an electronic mail (email) address or an IP address.

9. The method of claim 1 wherein analyzing information in the message to determine whether mobile number portability processing is required includes examining at least one of a translation type parameter, a global title indicator parameter, a numbering plan parameter, and a nature of address indicator parameter.

10. The method of claim 1 wherein receiving a message includes receiving a short message service message.

11. The method of claim 1 wherein performing a lookup in a first database includes performing a lookup in an exceptions-based routing database having entries that are exceptions to ranges of called party identifiers.

12. The method of claim 11 comprising, in response to failing to locate an entry corresponding to the called party identifier in the first database, performing a second lookup in a second database based on the called party identifier, wherein performing a lookup in the second database includes performing a lookup in a range-based routing database having entries corresponding to the ranges of called party identifiers.

13. A method for routing short message service messages directed to ported mobile subscribers, the method comprising:
at a telecommunications network routing element (302) including SS7 signal transfer capabilities and mobile number portability processing capabilities:
(a) receiving, from a mobile switching center (112), a short message service message;
(b) determining whether mobile number portability processing is required for the short message service message;
(c) in response to determining that mobile number portability processing is required for the short message service message, performing a lookup in a mobile number portability database located in the telecommunications network routing element (302) to determine routing information for the short message service message; and **characterized by**
(d) inserting a point code of the telecommunications network routing element (302) in an originating point code field of the short message service message and relaying the short message service message to a second mobile switching center (120) based on the routing information.

14. The method of any one of claims 1-13 wherein the steps are performed at a signal transfer point (STP).

15. The method of any one of claims 1-13 wherein the steps are performed at an SS7/IP gateway.

16. A telecommunications network element (302) including SS7 signal transfer functionality and mobile number portability processing functionality comprising:
(a) a communications module (308) for receiving messages, the messages each including a called party identifier formerly associated with a subscriber record in a first HLR in a first service provider's network;
(b) a first database (370) located in the telecommunications network routing element (302) containing information as to whether mobile number portability processing is required for the messages and information as to whether the called party identified in each message has been ported into a second service provider's network including a second HLR; and
(c) a database controller (346) for determining, based on the information in the first database (370), whether mobile number portability processing is required for each message and whether the called party is a ported-in subscriber, and **characterized by** in response to determining that mobile number portability processing is required for each message and that the called party is a ported-in subscriber, inserting a point code of the telecommunications network routing element in an originating point code field of the message and relaying the message to the second HLR.

17. The telecommunications network routing element (302) of claim 16 wherein the communications module (308) includes a signaling system 7 message transfer part capable link interface module.

18. The telecommunications network routing element (302) of claim 16 wherein the communications module (308) includes a transmission control protocol/Intemet protocol - transport adapter layer interface capable data communication module.

19. A telecommunications network routing element including SS7 signal transfer capabilities and number portability processing capabilities, the telecommunications network routing element (302) comprising:
(a) a communications module (308) for receiving a first message from a mobile switching center (112) in a first service provider's network;
(b) a first database (370) containing entries corresponding to called party identifiers, the entries each including individual mobile subscriber number portability information; and
(c) a database controller (346) for determining, based on the information in the first database (370), whether number portability processing is required for the first message, and, in response to determining that number portability processing is required for the first message, determining whether first message requests routing information for a subscriber whose directory number has been ported out of a first HLR (114) in the first service provider's network, and **characterized by** in response to determining that the subscriber has been ported out of the first service provider's network, formulating a response on behalf of the first HLR (114) including routing information for contacting the second service provider's network and forwarding the response to the MSC (112) in the first service provider's network.

20. The telecommunications network routing element (302) of claim 19 wherein the first message is a send routing information message.

21. The telecommunications network routing element (302) of claim 19 wherein the first message is a session initiation protocol message.

22. The telecommunications network routing element (302) of claim 19 wherein the database controller (346) determines whether mobile number portability processing is required by examining at least one of a translation type , global title indicator numbering plan , and nature of address parameters in the message.

23. A signal transfer point (302) comprising:
(a) an internal mobile number portability database (370) containing information for responding, on behalf of an HLR (114), to requests for routing information for ported mobile numbers; and
(b) a database controller (346) for performing a lookup in the mobile number portability database in response to a request for routing information for a ported mobile number and for responding on behalf of HLR (114) using information extracted from the mobile number portability database (370).

## Patentansprüche

1. Verfahren zum Verarbeiten von Nachrichten in einem mobilen Kommunikationsnetzwerk, wobei das Verfahren aufweist:
bei einem Telekommunikationsnetzwerk-Wegleitelement (302), welches einen Knoten mit der Verarbeitungsfähigkeit für SS7-Signalübertragung und Übertragbarkeit bzw. Portierbarkeit einer mobilen Nummer beinhaltet:
(a) Empfangen einer Nachricht, welche sich auf eine Kommunikation in einem mobilen Kommunikationsnetzwerk bezieht, wobei die Nachricht die Kennung einer angerufenen Partei beinhaltet, welche früher mit einer Teilnehmeraufzeichnung in einem ersten HLR bzw. Heimatregister in einem Netzwerk eines ersten Service-Providers verbunden ist;
(b) Analysieren von Information in der Nachricht, um zu bestimmen, ob die Mobilnummer-Portierbarkeit-Verarbeitung für die Nachricht erforderlich ist;
(c) in Antwort auf das Bestimmen, dass die Mobilnummer-Portierbarkeit-Verarbeitung für die Nachricht erforderlich ist, Durchführen eines Suchlaufs in einer ersten Datenbank (370), welche in dem Telekommunikationsnetzwerk-Wegleitelement (302) platziert ist, basierend auf der Kennung der angerufenen Partei, um zu bestimmen, ob die angerufene Partei in ein Netzwerk eines zweiten Service-Providers, welches ein zweites HLR (114) beinhaltet, portiert wurde; und **dadurch gekennzeichnet**:
(d) dass in Antwort auf das Bestimmen, dass die angerufene Partei in das Netzwerk des zweiten Service Providers portiert wurde, das Einfügen eines Punktcodes des Telekommunikationsnetzwerk-Wegleitelementes (302) in ein entstehendes Punkt-Codefeld der Nachricht und Weiterleiten der Nachricht an das zweite HLR (114).

2. Verfahren nach Anspruch 1, in welchem das Empfangen einer Nachricht das Empfangen einer Signalisiersystem-7-(SS7-) Zeichengabenachricht bzw. Signalisiernachricht beinhaltet.

3. Verfahren nach Anspruch 2, in welchem das Empfangen einer SS7- Signalisiernachricht das Empfangen einer Internet-Protokoll-verkapselten SS7-Signalisiernachricht beinhaltet.

4. Verfahren nach Anspruch 1, in welcher das Empfangen einer Nachricht das Empfangen einer Sendewegleitinformations-Signalisiernachricht beinhaltet.

5. Verfahren nach Anspruch 1, in welchem das Empfangen einer Nachricht das Empfangen einer Sitzung-Initiier-Protokoll-Signalisiernachricht beinhaltet.

6. Verfahren nach Anspruch 1, in welchem die Kennung der angerufenen Partei eine ISDN-Nummer des mobilen Teilnehmers beinhaltet.

7. Verfahren nach Anspruch 1, in welchem die Kennung der angerufenen Partei eine Telefonnummer beinhaltet, welche mit einem Festnetzteilnehmer verbunden ist.

8. Verfahren nach Anspruch 1, in welchem die Kennung der angerufenen Partei eine elektronische Mail-(E-mail-)Adresse oder eine IP-Adresse beinhaltet.

9. Verfahren nach Anspruch 1, in welchem die Analysierinformation in der Nachricht, um zu bestimmen, ob die Mobilnummer-Portierbarkeit-Verarbeitung erforderlich ist, das Überprüfen wenigstens eines der folgenden Parameter beinhaltet: eines Umsetzungstyp-Parameters, eines globalen Titelindikator-Parameters, eines Nummerierungsplan-Parameters und eines Adresse-Ursprung-Indikator-Parameters.

10. Verfahren nach Anspruch 1, in welchem das Empfangen einer Nachricht das Empfangen einer Kurzmitteilungsdienst - Nachricht beinhaltet.

11. Verfahren nach Anspruch 1, in welchem das Durchführen einer Suchlaufs in einer ersten Datenbank das Durchführen eines Suchlaufs in einer auf Ausnahmen basierenden Wegleitdatenbank beinhaltet, welche Einträge besitzt, welche Ausnahmen bezüglich von Bereichen der Kennungen der angerufenen Partei sind.

12. Verfahren nach Anspruch 11, welches aufweist: in Antwort auf das Fehlschlagen, einen Eintrag entsprechend der Kennung der gerufenen Partei in der ersten Datenbank zu ermitteln, das Durchführen eines zweiten Suchlaufs in einer zweiten Datenbank, basierend auf der Kennung der angerufenen Partei, wobei das Durchführen eines Suchlaufs in der zweiten Datenbank das Durchführen eines Suchlaufs in einer bereichsbasierten Wegleitdatenbank beinhaltet, welche Einträge entsprechend zu den Bereichen der Kennungen der angerufenen Partei besitzt.

13. Verfahren zum Wegleitlenken von Kurzmitteilungsdienstnachrichten, welche an portierte mobile Teilnehmer gerichtet sind, wobei das Verfahren aufweist:
bei einem Telekommunikationsnetzwerk-Wegleitelement (302), welches SS7-Signalübertragungsfähigkeiten und Übertragbarkeit- bzw. Portierbarkeit-Verarbeitungsfähigkeiten einer Mobilnummer beinhaltet:
(a) Empfangen einer Kurzmitteilungsdienstnachricht von einer MobilVermittlungsstelle (112);
(b) Bestimmen, ob die Portierbarkeits-Verarbeitung der Mobilnummer für die Kurzmitteilungsdienstnachricht erforderlich ist;
(c) in Antwort auf das Bestimmen, dass die Portierbarkeits-Verarbeitung der Mobilnummer für die Kurzmitteilungsdienstnachricht erforderlich ist, Durchführen eines Suchlaufs in einer Mobilnummer-Portierbarkeitsdatenbank, welche in dem Telekommunikationsnetzwerk-Wegleitelement (302) platziert ist, um Wegleitinformation für die Kurzmitteilungsdienstnachricht zu bestimmen; und **dadurch gekennzeichnet, dass**:
(d) ein Punktcode des Telekommunikationsnetzwerk-Wegleitelements (302) in ein entstehendes Punkt-Codefeld der Kurzmitteilungsdienstnachricht eingefügt wird und die Kurzmitteilungsdienstnachricht an eine zweite MobilVermittlungsstelle (120) basierend auf der Wegleitinformation weitergeleitet wird.

14. Verfahren nach einem der Ansprüche 1 bis 13, in welchem die Schritte bei einem Signalübertragungspunkt (STP) durchgeführt werden.

15. Verfahren nach einem der Ansprüche 1 bis 13, in welchem die Schritte bei einem SS7/IP-Gateway bzw. -Netzübergang durchgeführt werden.

16. Telekommunikationsnetzwerkelement (302), welches die Funktionalität einer SS7-Signalübertragung und die Funktionalität einer Mobilnummer-Portierbarkeits-Verarbeitung beinhaltet, welches aufweist:
(a) ein Kommunikationsmodul (308) zum Empfangen von Nachrichten, wobei die Nachrichten jeweils eine Kennung einer angerufenen Partei beinhalten, welche früher mit einer Teilnehmeraufzeichnung in einem ersten HLR bzw. Heimatregister in einem Netzwerk eines ersten Service-Providers verbunden war;
(b) eine erste Datenbank (370), welche in dem Telekommunikationsnetzwerk-Wegleitelement (302) platziert ist, welche Information enthält, ob das Portierbarkeits-Verarbeiten der Mobilnummer für die Nachrichten und die Information erforderlich ist oder ob die in jeder Nachricht identifizierte angerufene Partei in ein Netzwerk eines zweiten Service-Providers, welches ein zweites HLR beinhaltet, portiert wurde, und
(c) ein Datenbank-Steuergerät (346) zum Bestimmen, basierend auf der Information in der ersten Datenbank (370), ob die Mobilnummer-Portierbarkeits-Verarbeitung für jede Nachricht erforderlich ist und ob die angerufene Partei ein einportierter Teilnehmer ist, und **dadurch gekennzeichnet, dass** in Antwort auf das Bestimmen, dass die Mobilnummer-Portierbarkeits-Verarbeitung für jede Nachricht erforderlich ist und dass die angerufene Partei ein einportierter Teilnehmer ist, Einfügen eines Punktcodes des Telekommunikationsnetzwerk-Wegleitelementes in ein entstehendes Punktcodefeld der Nachricht und Weiterleiten der Nachricht an das zweite HLR.

17. Telekommunikationsnetzwerk-Wegleitelement (302) nach Anspruch 16, in welchem das Kommunikationsmodul (308) ein Signalisiersystem-7-Verbindungsinterface-Modul besitzt, welches für das Übertragen eines Nachrichtenteils fähig ist.

18. Telekommunikationsnetzwerk-Wegleitelement (302) nach Anspruch 16, in welchem das Kommunikationsmodul (308) ein Datenkommunikationsmodul beinhaltet, welches für das Übertragen eines Steuerungsprotokoll/Internetprotokoll-Transportadapter-Schicht-Interface fähig ist.

19. Telekommunikationsnetzwerk-Wegleitelement, welches SS7-Signalübertragungsfähigkeiten und Fähigkeiten zum Nummer-Portierbarkeits-Verarbeiten besitzt, wobei das Telekommunikationsnetzwerk-Wegleitelement (302) aufweist:
(a) ein Kommunikationsmodul (308) zum Empfangen einer ersten Nachricht von einer Mobilvermittlungsstelle (112) in einem Netzwerk eines ersten Service-Providers;
(b) eine erste Datenbank (370), welche Einträge entsprechend den Kennungen der angerufenen Partei enthält, wobei die Einträge jeweils individuelle Mobilteilnehmernummer-Portierbarkeitsinformation beinhalten; und
(c) ein Datenbanksteuergerät (346), um zu bestimmen, ob basierend auf der Information in der ersten Datenbank (370) eine Nummer-Portierbarkeits-Verarbeitung für die erste Nachricht erforderlich ist, und in Antwort auf das Bestimmen, dass Nummer-Portierbarkeits-Verarbeitung für die erste Nachricht erforderlich ist, zu bestimmen, ob die erste Nachricht Wegleitinformation für einen Teilnehmer anfordert, dessen Verzeichnisnummer von einem ersten HLR (114) in dem Netzwerk des ersten Service-Providers herausportiert wurde, und **dadurch gekennzeichnet, dass** in Antwort auf das Bestimmen, dass die Teilnehmemummer aus dem Netzwerk des ersten Service-Providers herausportiert wurde, eine Antwort mit Hilfe des ersten HLR (114) formuliert wird, welche Wegleitinformation zum Kontaktieren des Netzwerkes des zweiten Service-Providers beinhaltet, und Weiterleiten der Antwort an das MSC (112) in dem Netzwerk des ersten Service-Providers.

20. Telekommunikationsnetzwerk-Wegleitelement (302) nach Anspruch 19, in welchem die erste Nachricht eine Sende-Wegleitinformationsnachricht ist.

21. Telekommunikationsnetzwerk-Wegleitelement (302) nach Anspruch 19, in welchem die erste Nachricht eine Sitzungsinitiier-Protokollnachricht ist.

22. Telekommunikationsnetzwerk-Wegleitelement (302) nach Anspruch 19, in welchem das Datenbanksteuergerät (346) bestimmt, ob die Mobilnummer-Portierbarkeits-Verarbeitung durch das Überprüfen wenigstens eines der Parameter des Übertragungstyps, des globalen Titelanzeige-Nummerierungsplans und des Adressenursprungs der Nachricht erforderlich ist.

23. Signalübertragungspunkt (302), welcher aufweist:
(a) eine interne Mobilnummer-Portierbarkeit-Datenbank (370), welche Information für das Antworten auf Anforderungen für Wegleitinformation für portierte Mobilnummern, im Auftrag eines HLR (114), enthält; und
(b) ein Datenbanksteuergerät (346), um einen Suchlauf in der Mobilnummer-Portierbarkeit-Datenbank in Antwort auf eine Anforderung für Wegleitinformation für eine portierte Mobilnummer und für das Antworten im Auftrag eines HLR (114) durchzuführen, wobei Information benutzt wird, welche von der Mobilnummer-Portierbarkeit-Datenbank (370) extrahiert ist.

## Revendications

1. Un procédé pour traiter des messages dans un réseau de communications mobile, le procédé consistant à :
dans un élément (302) d'acheminement de réseau de télécommunications comprenant un noeud de transfert de signal SS7 et à fonctionnalité de traitement de portabilité de numéros mobiles :
(a) recevoir un message relatif à une communication dans un réseau de communications mobile, le message comprenant un identificateur de correspondant appelé anciennement associé à un enregistrement d'abonné dans un premier registre HLR dans le réseau d'un premier fournisseur de services ;
(b) analyser des informations dans le message pour déterminer si oui ou non un traitement de portabilité de numéro mobile est exigé pour le message ;
(c) en réponse au fait d'avoir déterminé que le traitement de portabilité du numéro mobile est exigé pour le message, exécuter une consultation dans une première base de données (370) située dans l'élément (300) d'acheminement de réseau de télécommunications sur la base de l'identificateur du correspondant appelé pour déterminer si oui ou non le correspondant appelé a été transféré dans le réseau d'un deuxième fournisseur de services comprenant un deuxième registre HLR (114) ; et
**caractérisé par** :
(d) en réponse au fait d'avoir déterminé que le correspondant appelé a été transféré dans le réseau du deuxième fournisseur de services, le fait d'insérer un code de point de l'élément (302) d'acheminement de réseau de télécommunications dans un champ de code de point d'origine du message et de renvoyer le message au deuxième registre HLR (114).

2. Procédé suivant la revendication 1, dans lequel la réception d'un message comprend la réception d'un message de signalisation d'un système de signalisation 7 (SS7).

3. Procédé suivant la revendication 2, dans lequel la réception d'un message de signalisation SS7 comprend la réception d'un message de signalisation SS7 encapsulé dans un protocole Internet.

4. Procédé suivant la revendication 1, dans lequel la réception d'un message comprend la réception d'un message de signalisation d'informations d'acheminement d'envoi.

5. Procédé suivant la revendication 1, dans lequel la réception d'un message comprend la réception d'un message de signalisation de protocole de déclenchement de session.

6. Procédé suivant la revendication 1, dans lequel l'identificateur du correspondant appelé comprend un numéro RNIS d'abonné mobile.

7. Procédé suivant la revendication 1, dans lequel l'identificateur du correspondant appelé comprend un numéro de téléphone associé à un abonné de réseau fixe.

8. Procédé suivant la revendication 1, dans lequel l'identificateur du correspondant appelé comprend une adresse de courrier électronique (courriel) ou une adresse IP.

9. Procédé suivant la revendication 1, dans lequel l'analyse d'informations dans le message pour déterminer si oui ou non un traitement de portabilité du numéro mobile est exigé consiste à examiner au moins l'un d'un paramètre de type de traduction, d'un paramètre d'indicateur de titre global, d'un paramètre de plan de numérotation et d'un paramètre indicateur d'adresse.

10. Procédé suivant la revendication 1, dans lequel la réception d'un message comprend la réception d'un message de service de messages courts.

11. Procédé suivant la revendication 1, dans lequel l'exécution d'une consultation dans une première base de données comprend l'exécution d'une consultation dans une base de données d'acheminement à base d'exceptions ayant des entrées qui sont des exceptions pour des plages d'identificateurs de correspondants appelés.

12. Procédé suivant la revendication 11, comprenant, en réponse à un échec de localisation d'une entrée correspondant à l'identificateur du correspondant appelé dans la première base de données, l'exécution d'une deuxième consultation dans une deuxième base de données sur la base de l'identificateur du correspondant appelé, dans lequel l'exécution d'une consultation dans la deuxième base de données comprend l'exécution d'une consultation dans une base de données d'acheminement basée sur une plage ayant des entrées correspondant aux plages d'identificateurs de correspondants appelés.

13. Procédé d'acheminement de messages de service de messages courts destinés à des abonnés mobiles transférés, le procédé consistant à :
dans un élément (302) d'acheminement de réseau de télécommunications comprenant des capacités de transfert de signaux SS7 et des capacités de traitement de portabilité de numéros mobiles :
(a) recevoir d'un centre (112) de commutation mobile, un message de service de messages courts ;
(b) déterminer si oui ou non un traitement de portabilité de numéro mobile est exigé pour le message de service de messages courts ;
(c) en réponse au fait de déterminer qu'un traitement de portabilité de numéro mobile est exigé pour le message de service de messages courts, exécuter une consultation dans une base de données de portabilité de numéros mobiles située dans l'élément (302) d'acheminement de réseau de télécommunications pour déterminer des informations d'acheminement pour le message de service de messages courts ; et
**caractérisé par** :
(d) le fait d'insérer un code de point de l'élément (302) d'acheminement de réseau de télécommunications dans un champ de code de point d'origine du message de service de messages courts et de renvoyer le message de service de messages courts à un deuxième centre (120) de commutation mobile sur la base des informations d'acheminement.

14. Procédé suivant l'une quelconque des revendications 1-13, dans lequel les étapes sont exécutées en un point de transfert de signal (STP).

15. Procédé suivant l'une quelconque des revendications 1-13, dans lequel les étapes sont exécutées sur une passerelle SS7/IP.

16. Elément (302) de réseau de télécommunications comprenant une fonctionnalité de transfert de signaux SS7 et une fonctionnalité de traitement de portabilité de numéro mobile, comprenant :
(a) un module (308) de communications pour recevoir des messages, les messages comportant chacun un identificateur de correspondant appelé anciennement associé à un enregistrement d'abonné dans un premier registre HLR d'un premier fournisseur de services ;
(b) une première base de données (370) située dans l'élément (302) d'acheminement de réseau de télécommunications contenant des informations indiquant si oui ou non le traitement de portabilité de numéro mobile est exigé pour les messages et des informations indiquant si oui ou non le correspondant appelé identifié dans chaque message a été transféré à un réseau d'un deuxième fournisseur de services comportant un deuxième registre HLR ; et
(c) une unité (346) de commande de base de données pour déterminer, sur la base des informations se trouvant dans la première base de données (370), si oui ou non un traitement de portabilité de numéros mobiles est exigé pour chaque message et si oui ou non le correspondant appelé est un abonné transféré en entrée, et **caractérisé par**, en réponse au fait de déterminer qu'un traitement de portabilité de numéro mobile est exigé pour chaque message et que le correspondant appelé est un abonné transféré en entrée, insérer un code de point de l'élément d'acheminement de réseau de télécommunications dans un champ de code de point d'origine du message et de retransmettre le message au deuxième registre HLR.

17. Elément (302) d'acheminement de réseau de télécommunications suivant la revendication 16, dans lequel le module (308) de communications comprend un module d'interface de liaison ayant une capacité de partie de transfert de message d'un système de signalisation 7.

18. Elément (302) d'acheminement de réseau de télécommunications suivant la revendication 16, dans lequel le module (308) de communications comporte un module de transmission de données ayant une capacité d'interface entre un protocole de commande de transmission/protocole Internet et une couche d'adaptation de transport.

19. Elément d'acheminement de réseau de télécommunications comportant des capacités de transfert de signaux SS7 et un certain nombre de capacités de traitement de portabilité de numéro, l'élément (302) d'acheminement de réseau de télécommunications comprenant :
(a) un module (308) de communications pour recevoir un premier message d'un centre (112) de commutation mobile dans un réseau d'un premier fournisseur de services ;
(b) une première base de données (370) contenant des entrées correspondant à des identifiants de correspondants appelés, les entrées comportant chacune des informations de portabilité de numéros d'abonnés mobiles individuels ; et
(c) une unité (346) de commande de base de données pour déterminer, sur la base des informations contenues dans la première base de données (370), si un traitement de portabilité de numéro est exigé pour le premier message et, en réponse à la détermination du fait qu'un traitement de portabilité de numéro est exigé pour le premier message, pour déterminer si oui ou non le premier message nécessite des informations d'acheminement pour un abonné dont le numéro de répertoire a été transféré en sortie d'un premier registre HLR (114) dans le réseau du premier fournisseur de services, et **caractérisé par**, en réponse à la détermination du fait que l'abonné a été transféré en sortie du réseau du premier fournisseur de services, le fait de formuler une réponse de la part du premier registre HLR (114) comportant des informations d'acheminement pour contacter le réseau du deuxième fournisseur de services et renvoyer la réponse au centre MSC (112) dans le réseau du premier fournisseur de services.

20. Elément (302) d'acheminement de réseau de télécommunications suivant la revendication 19, dans lequel le premier message est un message d'envoi d'informations d'acheminement.

21. Elément (302) d'acheminement de réseau de télécommunications suivant la revendication 19, dans lequel le premier message est un message de protocole de déclenchement de session.

22. Elément (302) d'acheminement de réseau de télécommunications suivant la revendication 19, dans lequel l'unité (346) de commande de base de données détermine si oui ou non un traitement de portabilité de numéro mobile est exigé en examinant au moins l'un d'un paramètre de type de traduction, d'un paramètre indicateur de titre global, d'un paramètre de plan de numérotation et d'un paramètre de type d'adresse dans le message.

23. Point (302) de transfert de signal, comprenant :
(a) une base de données (370) de portabilité de numéros mobiles interne contenant des informations pour répondre, de la part d'un registre HLR (114), à des demandes d'acheminement d'informations pour des numéros mobiles transférés ; et
(b) une unité (346) de commande de base de données pour exécuter une consultation dans la base de données de portabilité de numéros mobiles en réponse à une demande d'acheminement d'informations destinée à un numéro mobile transféré et pour répondre de la part du registre HLR (114) en utilisant des informations extraites de la base de données (370) de portabilité de numéros mobiles.
